(19) Europäisches Patentamt
European Patent Office
Office européen des brevets

(11) **EP 4 738 200 A1**

(12) **EUROPEAN PATENT APPLICATION**

(43) Date of publication:
**06.05.2026 Bulletin 2026/19**

(21) Application number: **25206054.6**

(22) Date of filing: **01.10.2025**

(51) International Patent Classification (IPC):
**G06N 3/0495** (2023.01) **G06N 3/063** (2023.01)
**G06F 12/0875** (2016.01) **G06N 3/082** (2023.01)
**G06N 3/0455** (2023.01)

(52) Cooperative Patent Classification (CPC):
**G06N 3/0495; G06F 12/0875; G06N 3/0455;
G06N 3/063; G06N 3/082**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.11.2024 US 202418934700**

(71) Applicant: **Intel Corporation
Santa Clara, CA 95054 (US)**

(72) Inventors:
• **GOBRIEL, Sameh
Dublin, 94568 (US)**
• **JAIN, Nilesh
Portland, 97229 (US)**
• **CHUA, Vui Seng
Hillsboro, 97124 (US)**
• **MUNOZ, Juan Pablo
Folsom, 95630 (US)**
• **JHA, Gopi Krishna
570032 Karnataka (IN)**

(74) Representative: **HGF
HGF Limited
4th Floor, 1 City Square
Leeds LS1 2ES (GB)**

(54) **DYNAMIC QUANTIZATION AND MEMORY MANAGEMENT OF KEY-VALUE CACHE FOR SERVING LARGE LANGUAGE MODELS**

(57) Key-value (KV) cache paging schemes can improve memory management for KV caches by storing a KV cache page having key tensors and value tensors for a fixed number of tokens in a fixed-sized block in the KV cache of a worker. To further improve memory management, the schemes can be modified to implement dynamic variable quantization. Quantization level of a KV cache page can be set based on a runtime importance score of the KV cache page. In addition, the quantization level of the KV cache page can be set based on the system load. The end result is a scheme that can achieve a high compression ratio of KV cache pages in the KV cache. Fitting more KV cache pages in the KV cache can lead to higher inference throughput, higher system-level user capacity, and higher end-to-end service availability.

FIG. 1

**Description**

<u>Background</u>

Deep neural networks (DNNs) are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as there can be a large number of operations as well as a large amount of data to read and write.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an exemplary large language model implemented as a transformer-based neural network, according to some embodiments of the disclosure.
FIG. 2 illustrates a serial transformer block, according to some embodiments of the disclosure.
FIG. 3 illustrates a parallel transformer block, according to some embodiments of the disclosure.
FIG. 4 illustrates an attention layer of a transformer block, according to some embodiments of the disclosure.
FIG. 5 illustrates computations in a self-attention layer without key-value (KV) caching, according to some embodiments of the disclosure.
FIG. 6 illustrates computations in a self-attention layer with KV caching, according to some embodiments of the disclosure.
FIG. 7 illustrates a system having distributed workers to execute requests of a transformer-based neural network, according to some embodiments of the disclosure.
FIG. 8 illustrates a KV cache paging scheme, according to some embodiments of the disclosure.
FIG. 9 illustrates a non-critical path in the case of a KV cache swap-out event, according to some embodiments of the disclosure.
FIG. 10 illustrates a KV cache paging scheme with dynamic variable quantization, according to some embodiments of the disclosure.
FIG. 11 illustrates a KV cache manager to implement dynamic variable quantization, according to some embodiments of the disclosure.
FIG. 12 is a flowchart illustrating a method for KV caching with dynamic variable quantization, according to some embodiments of the disclosure.
FIG. 13 is a flowchart illustrating another method for KV caching with dynamic variable quantization, according to some embodiments of the disclosure.
FIG. 14 is a block diagram of an exemplary computing device, according to some embodiments of the disclosure.

<u>Detailed Description</u>

<u>*Overview*</u>

The last decade has witnessed a rapid rise in artificial intelligence (AI) based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more deep learning operations (also referred to as "neural network operations"), such as convolution operation, matrix multiplication operation, layer normalization operation, batch normalization operation, SoftMax operation, pooling operation, element-wise operation, linear operation, non-linear operation, and so on. While DNNs are effective at analyzing and predicting, they come at a cost of immense computational power. DNNs can consume significant power and runtime during training and during inference.

Transformer-based neural networks or transformer-based models are a type of DNN that can be used to power large language models (LLMs) and computer vision models (referred to in literature as ViTs). Transformer-based neural networks are used in services and applications such as natural language processing, speech processing, conversational AI assistants, image captioning, object detection, video understanding, recommendation systems, bioinformatics, time-series forecasting, reinforcement learning, and generative models to produce text, image, or music. Cloud companies can offer a transformer-based neural network as a hosted service, where the transformer-based neural network can be served by many distributed graphical processing units (GPU) workers, and the hosted service can service many requests for many users.

For some LLMs or other machine learning models, an autoregressive transformer-based neural network is used. The transformer-based neural network can generate one token at a time (e.g., one word at a time) based on an input prompt and the previous sequence of the output's tokens that the transformer-based neural network has generated so far. The process involving performing all the operations in the transformer-based neural network is repeated, token by token, until the transformer-based neural network outputs a termination token. A key-value (KV) cache is introduced to avoid redundant computations when generating tokens one at a time. Specifically, the KV cache allows cached key tensors and value tensors (attention outputs of the operations in the transformer-based neural network) from previous tokens to be reused.

The cached key tensors and value tensors may include (intermediate) key tensors and value tensors generated in the attention mechanism (e.g., the one or more attention layers in a transformer-based neural network) during the process of producing previous output tokens of a request. Herein, a request refers to an instruction to a transformer-based neural network to generate one or more output tokens based on one or more input tokens. A request may include a request to a transformer-based neural network to generate one or more responses having one or more output tokens to an input prompt having one or more input tokens. The generation may involve autoregressive generation of tokens, where, to generate the next token involves using a generated token as part of the input tokens. A request can include or involve one or more tokens. The cached key tensors and value tensors can correspond to the one or more tokens. Using a KV cache to store the cached key tensors and value tensors can significantly reduce computation time and memory usage. The intermediate key tensors and value tensors may include key tensors and value tensors produced across layers and attention heads within a layer during the generation of a token.

Herein, input or output data of deep learning operations, such as the attention outputs or intermediate attention outputs of the attention mechanism in an attention layer, may be arranged in data structures called tensors. A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. The attention mechanism may produce attention outputs, such as key tensors and value tensors that correspond to one or more tokens, which can be cached in the KV cache to avoid redundant computations.

One important challenge for executing these transformer-based neural networks and serving many requests to the neural networks is the management of KV cache. Efficient use of the KV cache can reduce the cost of serving individual requests, increase throughput of the hosted service, and increase availability of the hosted service. Managing the KV cache is not trivial because KV cache size grows linearly with sequence length (each request can be huge), sequence lengths is not known a-priori, and system load (e.g., number of requests to the hosted service) can be unpredictable. In some cases, the KV cache can require several times more memory than the memory used to store the model parameters.

KV cache paging schemes can improve memory management for KV caches. The physical KV cache of a GPU worker is partitioned into fixed-sized blocks. The computed key tensors and value tensors can be organized as KV cache pages. A KV cache page can have (computed) key tensors and value tensors for a fixed number of tokens. KV cache paging schemes involve storing a KV cache page in a fixed-sized block in the physical KV cache of the GPU worker. KV cache pages having key tensors and value tensors corresponding to a sequence of tokens can be stored in non-contiguous fixed-sized blocks in the physical KV cache of the GPU worker. The GPU worker can be instructed, by instructions sent by a scheduler, e.g., implemented on a central processing unit (CPU), to retrieve the cached key tensors and value tensors of KV cache pages at the specific blocks in the physical KV cache when performing the attention computations to produce the next token.

KV cache paging schemes can have some limitations. In some cases, the KV cache pages are treated with equal importance, allocated with the same memory footprint and all being replaced with a variant of least recently used (LRU) algorithm irrespective of the tokens associated with a given KV cache page. Once the size of the blocks of the physical KV cache of a GPU worker is set, the maximum number concurrent users is fixed. No dynamic allocation or graceful performance scaling is possible based on the dynamic nature of the system load. On the system-level, the resources of the CPU that is coordinating the distributed GPU workers may be better utilized when the CPU is not copying KV cache pages to the physical KV cache of the GPU worker.

Improvements to the KV cache paging schemes can be made based on insights related to the fact that not all KV cache pages are equal. Examining contents of KV cache pages, a handful of pivotal tokens in the sequence contribute the most to the attention scores while the other non-pivotal tokens contribute very little to the inference output. Herein, attention scores refer to values that indicate how relevant an input token is to the final output of the attention mechanism, or how much an input token contributes to the attention output. The relevance or contribution can be measured in terms of attention weight corresponding to the token. An attention weight matrix can be calculated based on the query matrix and the key matrix. In some cases, a distance of the token to a current token being processed can be used to determine the attention weight of the token. In some cases, attention scores for various tokens may be calculated based on the attention weight matrix produced in an attention mechanism (e.g., an attention weight matrix produced based on the query matrix and the key matrix). The cached key tensor(s) and value tensor(s) corresponding to different tokens may have different attention scores. Herein, a pivotal token can include a token whose attention score exceeds a threshold or meets one or more criteria. For some LLMs, a small subset of the tokens (e.g., 10-40% of the tokens) corresponds to almost 90% of the overall attention score. Moreover, the pivotal tokens are not evenly distributed but can be concentrated at specific page(s) of the different KV cache pages. In one LLM, the attention maps (a map of attention scores) for the first two layers of the transformer-based neural network indicate that recent tokens receive more attention, and beyond the two layers, the attention maps indicate that the LLM attends more strongly to the initial tokens across all layers and heads. In addition, the set of pivotal tokens is dynamic, e.g., changes over time as new tokens are generated/calculated and new key tensors and value tensors are added to the KV cache. Attention score of a certain token can change or differ, not only per layer or head, but also with time due to the change of the distribution during the generation phase.

When applying these insights to KV cache paging schemes, several observations can be made. In some scenarios, a small number of (e.g., about 10%-40%) of the KV cache pages stored in fixed-sized blocks in the physical KV cache memory would have pivotal tokens. Herein, a KV cache page having one or more pivotal tokens is called a pivotal page. Because of the locality-biased distribution of tokens, the importance score of a given page can vary significantly across KV cache pages, where a small percentage of pages may have a much higher importance score (e.g., more pivotal tokens) than other pages. The importance score of a KV cache page (or a pivotal page) is dynamic and the attention scores of the contents in the KV cache page (or pivotal page) can change with the layer, attention head, and time as more tokens are generated.

To further improve memory management and address one or more of the limitations of KV cache paging schemes, the KV cache paging schemes can be modified to implement dynamic variable quantization, thus offering higher compression ratio of the KV cache. In some embodiments, the KV cache paging schemes are modified to include the ability to allow for different KV cache pages to have different quantization levels (or precisions), depending on the importance score of a given KV cache page. Various figures herein illustrate low-overhead implementations of dynamic variable quantization of KV cache pages.

Examples of different quantization levels may include: FP64 (64-bit floating point representation), FP32 (32-bit floating point representation), FP16 (16-bit floating point representation), FP8 (8-bit floating point representation), INT16 (16-bit integer representation), INT8 (8-bit integer representation), INT4 (4-bit integer representation), BFLOAT16 (16-bit floating point representation), UINT8 (8-bit unsigned integer representation), etc.

Quantization level of a KV cache page can be set based on a runtime importance score of the KV cache page. A KV cache page may include one or more key tensors and one or more value tensors that are calculated by an attention head of the transformer-based neural network for one or more tokens. The one or more tokens may be part of a sequence of tokens associated with a request to a transformer-based neural network. The one or more tokens may be at least a part of a request for a GPU worker to perform one or more operations of a transformer-based neural network. An importance score can be calculated based on one or more attention scores of the one or more tokens to which the one or more key tensors and the one or more value tensors of the KV cache page corresponds. A larger importance score of a KV cache page can mean that a quantization level that utilizes more bits can be assigned to the KV cache page. In some embodiments, a KV cache page is considered a pivotal page if at least one of the tokens has an attention score that is greater than a threshold. In some embodiments, an importance score can be calculated based on the relative importance of the pivotal page to other KV cache page(s). Allocating more bits to the KV cache page with a high importance score can optimize model inference accuracy. Different ranges of importance scores of pivotal pages can map to different quantization levels (or vice versa). Phrased differently, a set of quantization levels can be used to assign a suitable quantization level to a pivotal page or KV cache page. A quantization level in the set of quantization levels can correspond to a range of importance scores. The set of quantization levels can be a design knob, which allows a system administrator to change based on one or more factors/conditions.

The determination of a suitable quantization level (e.g., computing the importance score for a KV cache page) and changing the KV cache page quantization level (e.g., quantization or dequantization) can be performed advantageously with low-overhead during a non-critical path when a KV cache page is being swapped-out and is waiting for a swap-in event. The timing is non-critical because the swapped-out KV cache page will not be used for attention computation until the KV cache page is swapped-in in response to other KV cache pages currently in the KV cache are used and freed from the KV cache. During the non-critical path, the CPU (that is responsible for scheduling requests to a GPU worker and managing the KV cache of the GPU worker) has available cycles that can be used to compute the importance score of a KV cache page and change the quantization level of the KV cache page if appropriate. In some cases, the KV cache page at different quantization levels can be precomputed and stored in the memory of the CPU to further minimize overhead incurred from changing quantization level of a KV cache page. If the quantization level is changed, the CPU can update a pointer to the memory of the CPU referencing the KV cache page quantized at the assigned quantization level, and the update of a pointer can be performed with very low-overhead. In response to a (following) swap-in event, the KV cache page quantized at the assigned quantization level can be retrieved and provided to the KV cache of the GPU worker.

In addition, the quantization level of the KV cache page can be set or updated based on the system load. In some situations, the quantization level of the KV cache page can be changed independently from the change in the importance score of the KV cache page. In some embodiments, a system administrator can modify the set of quantization levels mapping different quantization levels to different ranges of importance scores to cause a different quantization level to be assigned to a KV cache page having the same importance score. Changing the set of quantization levels used can tune or change the tradeoffs between memory footprint and inference accuracy for the KV cache. In some situations, the quantization level of the KV cache page can be changed based on system load and the importance score of the KV cache page. In some embodiments, a different quantization level can be assigned to a KV cache page when using a modified set of quantization levels and when the importance score of the KV cache page changes. A change in the system load can cause or trigger the quantization level for a given KV cache page to be determined or reevaluated to better scale the KV cache memory footprint in proportion to the system load and demand.

The end result is a scheme that uses dynamic variable quantization which is set according to runtime importance of a KV cache page and (optionally) proportionally to the system load. In some embodiments, the scheme uses dynamic variable quantization which is set according to the system load. The schemes can achieve a high compression ratio of KV cache pages in the KV cache. Fitting more KV cache pages in the KV cache can lead to higher inference throughput, higher system-level user capacity, and higher end-to-end service availability.

In one experiment, 20% of KV cache pages carrying 87% of the attention scores can be quantized with 16 bits, the next 10% of the KV cache pages can be quantized with eight bits, and for the remaining 70% of the KV cache pages can be quantized with four bits. A baseline is implemented to have a fixed quantization level of FP16 for all KV cache pages. Comparing the solution with dynamic variable quantization with the baseline, 2.35X compression of the KV cache memory footprint can be achieved. In addition, the compression of memory footprint can translate to a linear speedup of serving throughput.

Various embodiments described herein may be illustrated in the context of a specific architecture or implementation. It is envisioned that the teachings of the embodiments described herein may apply to other neural networks or models having an attention mechanism where KV cache paging schemes may be employed to reduce computation.

Various examples of KV cache paging schemes are described in the context of a CPU that is managing distributed GPU workers. KV cache pages can be cached in the KV cache (a chunk of the GPU memory) that is located with the GPU workers, and a CPU memory of the CPU may include swap space to store copies of the KV cache pages. It is envisioned that the teachings of the embodiments described herein can be applied to other multi-level cache systems or hierarchical caches, such as cache systems in a stand-alone computing device. Multi-level cache systems or hierarchical caches can include multiple layers of memory (e.g., L1 cache, L2 cache, and L3 cache), each with different sizes and speeds. Teachings relating to dynamic variable quantization performed during a non-critical path based on runtime importance scores and/or system load can be applied to optimize memory usage of the L1 cache (or fast caches) that may be serving as the KV cache.

*Transformer-based neural networks or transformer-based models*

Generative AI Models such as LLMs have taken the computing industry by storm. These models are armed with a gigantic number of parameters, exhibit exceptional state of the art performance across various tasks. Current trends of LLM models are heading to scale of multi-trillion parameter models. According to one estimate, models are growing by 10x every 2 years. Current trajectory makes it practically impossible for smaller and medium players to operate and serve LLMs, and the sheer size of these models (one model requires 325GB of memory simply to load its model weights) renders traditional optimization techniques like prefetching, dataflow, and caching completely ineffective. Furthermore, LLM during inference presents a tremendous challenge for the compute and memory resources (both bandwidth and capacity) for the platform. Additionally, the strict latency requirement (in the order of 50-100ms), makes it more challenging to deliver high throughput while maintaining the latency.

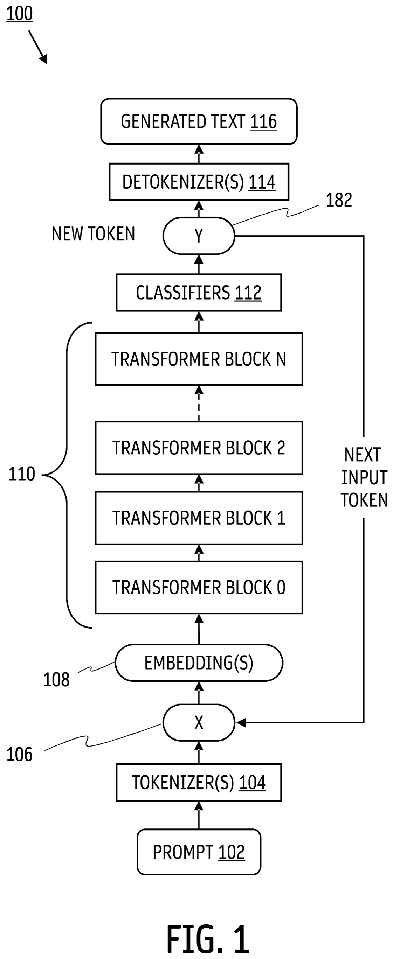

FIG. 1 illustrates an exemplary LLM 100 implemented as a transformer-based neural network, according to some embodiments of the disclosure. LLM 100 may include one or more components: tokenizer(s) 104, a stack of transformer blocks 110 (e.g., shown as transformer block 0, transformer block 1, transformer block 2, .... Transformer N), one or more classifiers 112, and detokenizer(s) 114. Tokenizer(s) 104 can break input data (e.g., prompt 102) into tokens. For example, prompt 102 may include text and tokenizer(s) 104 may break prompt 102 into sub-words. One or more tokens, represented as X 106, may be converted into embedding(s) 108, which includes high-dimensional input features for the stack of transformer blocks 110. The stack of transformer blocks 110 can acquire knowledge about the input data.

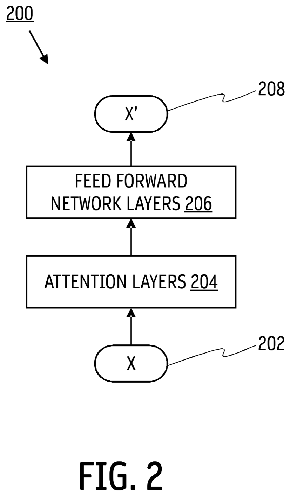

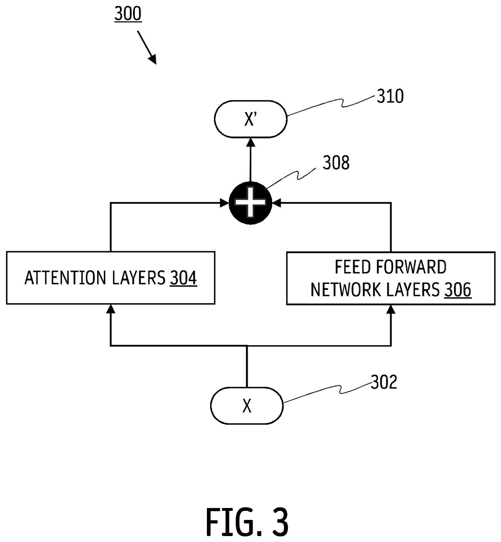

A transformer block in the stack of transformer blocks 110 can include two types of layers equipped with learning parameters: attention layers and feedforward (FFN) layers. One exemplary arrangement of a transformer block is illustrated in FIG. 2. Another exemplary arrangement of a transformer block is illustrated in FIG. 3. Attention layers allow the model to weigh the importance of tokens based on their contextual relevance and to capture their dependencies. Attention layers implement the attention mechanism of a transformer block, which captures contextual information by attending to positions within the sequences. FFN layers provide non-linear transformations to tokens independently.

One or more classifiers 112 can produce predictions or generate tokens based on the learned representations of the stack of transformer blocks 110. The tokens may be used by one or more detokenizer(s) 114 to produce generated text 116.

LLM 100 can serve as a framework for modeling complex relationships in text, images, audio, video, point clouds, graphs, etc. The number of learning parameters can be scaled up using the framework to model even more complex relationships.

LLM 100 is formulated to model sequential text in an autoregressive manner. Each subsequent token, shown as Y 182, is determined by the context of preceding tokens. During the training process of LLM 100, the transformer architecture is tasked to learn to predict the next token, Y 182, through slices of text with known succeeding tokens. Leveraging the abundance of text data available on the Internet, the size of transformers can be scaled up tremendously to hundred-billions of parameters. LLM 100 may be known as autoregressive transformer, causal transformer, decoder-only transformer, and decoding transformer. Subsequent alignment stage can make LLM 100 converse contextually and to human preference. A conversational LLM involving LLM 100 can be referred to as a Generative Pre-trained Transformer (GPT). Aligned LLMs may be known as instruction-tuned, instruction-following, and supervised fine-tuned LLMs.

Autoregressive modeling entails a sequential prediction during its deployment, hence LLM-based applications involve, by and large, text generation, outputting a token after token. The autoregressive nature of the model means engaging the whole model structures for every token prediction. Attributed to the vast number of model parameters (currently reaching scale of billions), the sequence inference is computationally demanding, characterized by an initial compute-intensive first prediction, followed by subsequent token-to-token predictions that are bottlenecked by memory bandwidth. The attention layers computation complexity is quadratic with the sequence length. Such complexity severely bottlenecks the performance especially for longer sequences.

FIG. 2 illustrates serial transformer block 200, according to some embodiments of the disclosure. Serial transformer block 200 includes attention layers 204, and FFN layers 206. An input, X 202, is first processed by attention layers 204, and the output of attention layers 204 is passed to FFN layers 206. FFN layers 206 may produce output, X' 208. In some cases, serial transformer block 200 may include a skip connection that passes the input, X 202, to be added the output, X' 210. Serial transformer block 200 may be implemented as one of the transformer blocks of the stack of transformer blocks 110 in FIG. 1.

FIG.3 illustrates parallel transformer block 300, according to some embodiments of the disclosure. Parallel transformer block 300 includes attention layers 304, and FFN layers 306. An input, X 302, is processed by attention layers 304, and the input, X 302, is processed (in parallel) by FFN layers 306. The output of attention layers 304 and the output of FFN layers 306 are combined at adder 308. Adder 308 may produce a sum of its inputs, e.g., the output of attention layers 304 and the output of FFN layers 306. Adder 308 may produce a weighted sum of its inputs, e.g., the output of attention layers 304 and the output of FFN layers 306. Adder 308 may produce output, X' 310. In some cases, parallel transformer block 300 may include a skip connection that passes the input, X 302, to be added to the output, X' 310. Parallel transformer block 300 may be implemented as one of the transformer blocks of the stack of transformer blocks 110 in FIG. 1.

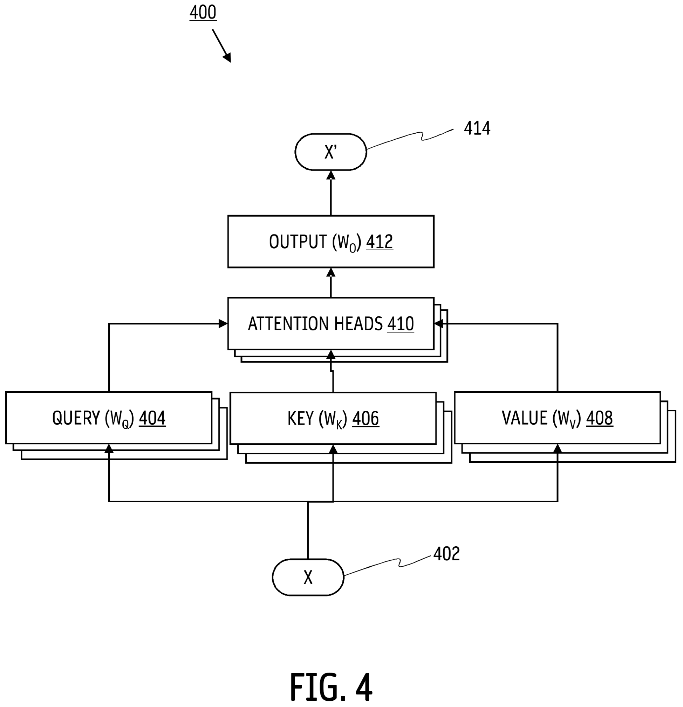

FIG. 4 illustrates attention layer 400 of a transformer block, according to some embodiments of the disclosure. Attention layer 400 may be included as part of a transformer block in the stack of transformer blocks 110 in FIG. 1. As an example, attention layer 400 illustrates a multi-head attention layer. The input, X 402, be converted into queries (Q), keys (K), and values (V). Attention layer 400 includes parallel linear projections 404 of queries using the query weight matrix $W_Q$. Attention layer 400 includes parallel linear projections 406 of keys using the key weight matrix $W_K$. Attention layer 400 includes parallel linear projections 408 of values using the value weight matrix $W_V$. Results of linear projections are provided to parallel attention heads 410. An attention head 410 may apply an attention function using an output from one of the linear projections 404, an output from one of the linear projections 406, and an output from one of the linear projections 408. The attention function can be defined as:

$$Attention(Q,K,V) = SoftMax\left(\frac{QK^T}{d_k}\right)V \quad \textbf{(eq. 1)}$$

Q in equation 1 represents an output from one of the linear projections 404. K in equation 1 represents an output from one of the linear projections 406. V in equation 1 represents an output from one of the linear projections 408. $d_k$ represents a scaling factor. An attention head 410 may compute $\frac{QK^T}{d_k}$ to produce a matrix of raw attention scores based on the queries and keys. An attention head 410 may compute $SoftMax\left(\frac{QK^T}{d_k}\right)$ to produce a matrix of attention weights, having a normalized matrix of the raw attention scores. An attention head 410 may compute $SoftMax\left(\frac{QK^T}{d_k}\right)V$ to produce a final output where the attention weights are weighted by the values to form a final attended representation.

Outputs of parallel attention heads 410 may be concatenated together and passed to linear projection 412 using an output matrix $W_O$. The output of linear projection 412 is the output, X' 414, of attention layer 400.

A linear projection used in attention layer 400 may include multiplying an input to the linear projection with a learned weight matrix. In some cases, the matrix multiplication is followed by an optional non-linearity, such as an activation function.

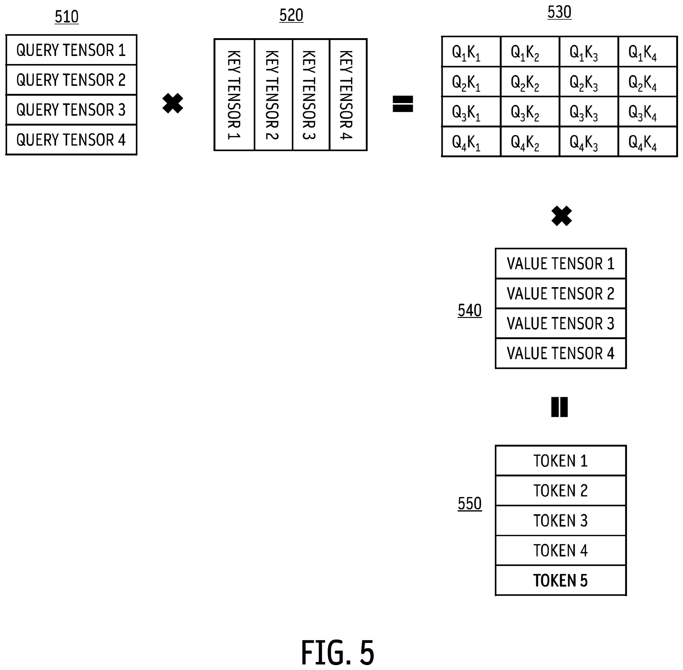

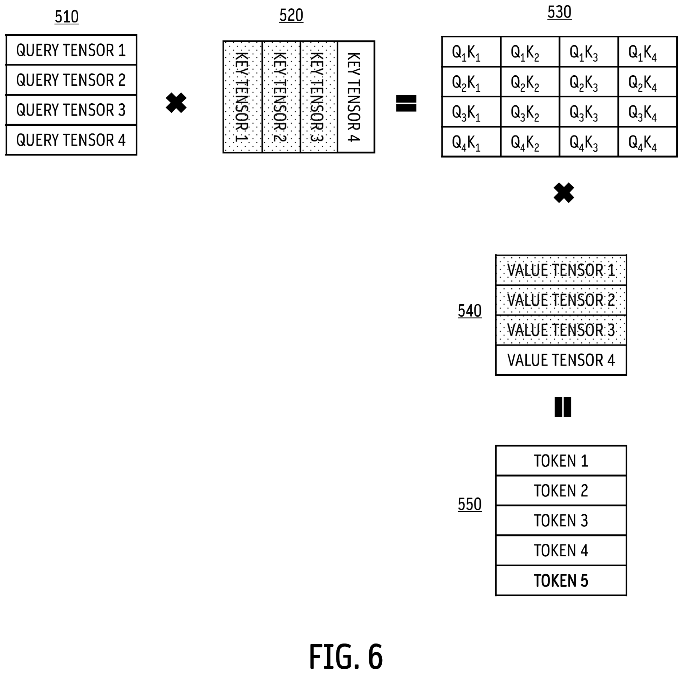

As discussed with FIG. 1, the attention mechanism in an autoregressive transformer-based model is a big bottleneck for performance for long sequences. A KV cache can be provided to store previously computed key tensors and value tensors from the attention mechanism and reuses the cached key tensors and value tensors for generating current tokens, and thus avoids intensive recalculations of the key tensors and value tensors for previous tokens. KV caching became the de-facto optimization of the inference process to accelerate generation throughput for LLMs, allowing the attention operation to scale linearly rather than quadratically in the total sequence length. FIGS. 5 and 6 contrasts computations in an attention layer without KV caching and with KV caching.

*Understanding KV caching and KV cache paging schemes*

FIG. 5 illustrates computations in a self-attention layer without KV caching, according to some embodiments of the disclosure. The self-attention layer may be a multi-head self-attention layer. In some embodiments, the self-attention layer is in a decoder of a transformer. In some embodiments, the self-attention layer may be in a transformer block, such as transformer blocks illustrated in FIG. 1. The computations in the self-attention layer may include multiplication of a query matrix 510 and a key matrix 520 (having one or more key tensors), which results in an attention weight matrix 530. The computations in the self-attention layer also includes multiplication of the attention weight matrix 530 and a value matrix 540 (having one or more value tensors), which results in an output matrix 550 encoding one or more new tokens. In some embodiments, one or more tokens, such as token 5, may be generated or derived based on output matrix 550. Output matrix 550 may include a context-aware attention representation that is weighted by value matrix 540. Output matrix 550 may be produced by the attention layer according to equation 1, using query matrix 510, key matrix 520, and value matrix 540, from which one or more new tokens can be generated. In some embodiments, the computations in the self-attention layer may include other computations, such as computations with a scaling function, SoftMax function, and so on. For the purpose of simplicity and illustration, these computations are not shown in FIG. 5.

Each of the query matrix 510, key matrix 520, and value matrix 540 may include a tensor (e.g., vector) for each of the tokens in the input sequence. For the purpose of illustration and simplicity, the input sequence has four tokens: tokens 1-4. The query matrix 510 may include four query tensors produced based on the four input tokens: query tensors 1-4. The key matrix 520 may include four key tensors: key tensors 1-4. The value matrix 540 may include four value tensors: value tensors 1-4. In the embodiments of FIG. 5, as the decoder does not implement KV caching, computations to produce the key tensors in the key matrix 520 and all the value tensors in the value matrix 540 need to be conducted. Some of the computations have already been conducted in the previous inference phase, e.g., computations to produce the key tensors 1-3 and computations on the value tensors 1-3. The duplication of these computations can be a waste of computational resources, such as power, time, and so on.

FIG. 6 illustrates computations in a self-attention layer with KV caching, according to some embodiments of the disclosure. Different from the embodiments of FIG. 5, the decoder in FIG. 6 implements KV caching. With KV caching, the key tensors and value tensors computed in the previous inference phase(s) (e.g., key tensors and value tensors corresponding to tokens 1-3) are cached in a KV cache and can be reused in the current inference phase. A KV cache stores previously computed key tensors and value tensors computed for one or more tokens in the attention mechanism and reuses them for generating the next attention output or token. The KV cache can be allocated in GPU memory and contents of the KV cache can be loaded from CPU memory. The execution time scales more gracefully when KV caching is used as the sequence length increases. For instance, the generated intermediate KV tensors corresponding to previous tokens can be stored in a KV cache.

In the current inference phrase illustrated in FIG. 6, the cached key tensors and value tensors can be retrieved from a KV cache. Data that can be retrieved from the KV cache is highlighted with a dotted pattern in FIG. 6. Key tensors 1-3 may be retrieved from the KV cache. Value tensors 1-3 may be retrieved from the KV cache. In the current inference phase, the query matrix 510 can be multiplied with a concatenation of key tensor 4 and cached key tensors 1-3, followed by a SoftMax of the entire raw attention scores. The attention weights produced by performing SoftMax of the raw attention scores can be further multiplied with a concatenation of value tensor 4 and cached value tensors 1-3 to generate new results. After the inference is completed, key tensor 4 is added to the KV cache. In some cases, the key tensors 1-3 can be updated in the KV cache. Also, value tensor 4 is added to the KV cache. In some cases, the value tensors 1-3 can be updated in the KV cache. This process is repeated per token. KV caching can reduce the number of computations in the self-attention layer. The amount of computation is reduced significantly when cached key tensors and value tensors can be reused to generate the next token. Therefore, computational resources can be saved. The performance and efficiency of the transformer model can be improved through KV caching.

When the KV cache is used, the previously computed key-value tensors are stored in memory (e.g., the KV cache) to avoid repetitive key-value projection computation in the attention mechanism, as illustrated in FIG. 6. The total memory footprint for a KV cache instance can be easily computed using equation 2:

$$Size = 2 \times precision \times n_{layers} \times d_{model} \times L_{sequence} \times B \qquad \textbf{(eq. 2)}$$

*precision* is the number of bytes per value stored (e.g., B for FP32), $n_{layers}$ represents the number of layers in the model, $d_{model}$ represents the dimensionality of the embeddings, $L_{sequence}$ is the length of context in tokens, B is the batch size and the factor two is applied because two matrices for keys (K) and values (V) are needed.

As shown in equation 2, the KV cache size scales linearly with the (maximum) sequence length in the input context and the batch size. In practice, the size for the KV cache can be enormous. For example, a 175 billion parameters transformer-based model can consume around 325 GB of memory for storing the parameters. At the same time, at batch size 128 and sequence length 8K, the KV cache can have a size of around 4608 GB of memory, which is several orders of magnitude (12X) larger than the model weights themselves. Since the total sequence length cannot be known ahead of time, the KV cache memory requirements are therefore unknown, and this makes LLM memory management particularly challenging. Typically, the maximum sequence length (usually, 4K, and growing rapidly) is used for memory allocation to host the KV cache which leads to severely fragmented memory and very low batch size, and as a result, a low number of concurrent users for an LLM service is feasible.

The problem of the size of the KV cache is becoming increasingly prominent and is one of the key factors that makes LLM model deployment very costly. It is challenging to reduce KV cache memory footprints in LLMs without accuracy drops. With scaling sequence length becoming a critical demand for many companies, this makes limiting the context sequence inconceivable. The only design knob available for scaling a sizeable LLM deployment according to equation 2 is the batch size (B). Reducing batch size in effect reduces the model throughput, which as a result, severely degrades the total number of requests per second the model can serve.

KV cache paging schemes were introduced to improve memory management and increase serving model throughput. KV cache paging schemes manages attention key tensors and value tensors by dividing them into smaller, more manageable chunks, referred to herein as KV cache pages. KV cache pages may be copied into fixed-sized blocks of the physical KV cache of a GPU worker. The GPU worker may be instructed to retrieve data from the KV cache based on the memory address provided by a KV cache manager. KV paging schemes are similar to virtual memory and paging in operating systems. When serving an LLM, a centralized scheduler (e.g., a CPU-based computing system) may manage the KV caches of distributed workers (e.g., GPU workers) and coordinate execution of requests by the distributed workers. Specifically, the centralized scheduler may control where KV cache pages are stored on the physical KV caches of the distributed workers. The centralized scheduler may coordinate swap-in and swap-out of KV cache pages and make cached key tensors and value tensors available to a distributed worker when the distributed worker is instructed to execute a request.

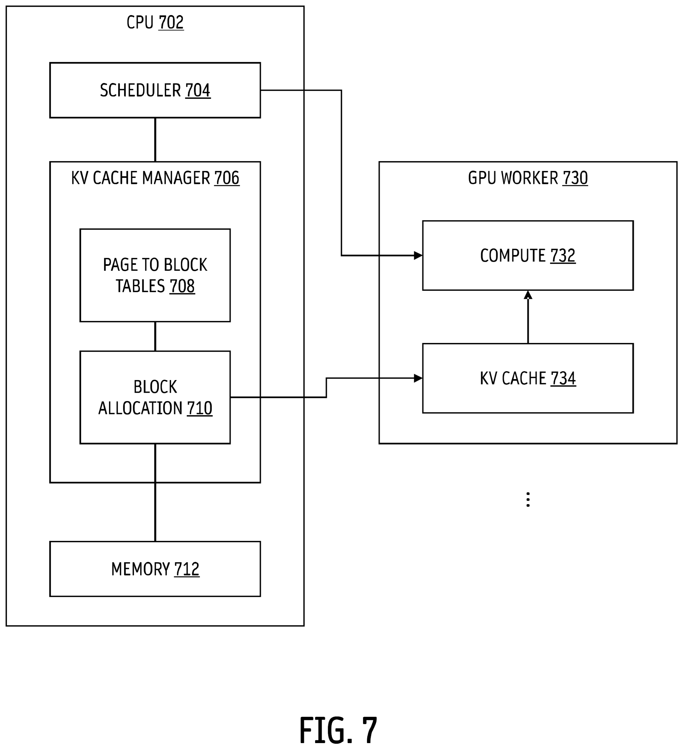

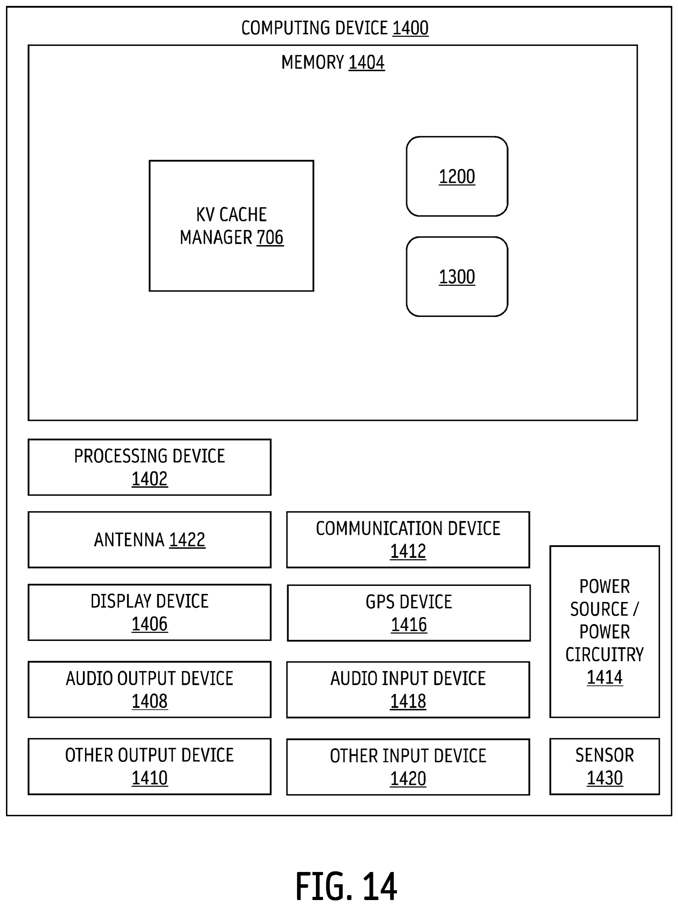

FIG. 7 illustrates a system having distributed workers to execute requests of a transformer-based neural network, according to some embodiments of the disclosure. Distributed workers may be requested by a centralized scheduler to perform one or more operations of a transformer-based neural network. The centralized scheduler may schedule one or more requests to be fulfilled by a worker. The system may include CPU 702, and one or more distributed workers (one instance is shown as GPU worker 730) that are communicably coupled to CPU 702. CPU 702 (e.g., a computing processor, a computing system, a CPU-based computing system, or a computing device 1400 of FIG. 14) may be included to implement functionalities of the centralized scheduler. GPU worker 730 (e.g., a computing processor, a computing system, a GPU-based computing system, a hardware neural network accelerator-based computing system, or a computing device 1400 of FIG. 14) may be included to perform operations of a transformer-based neural network, in response to requests from the centralized scheduler. GPU worker 730 may serve, complete, or fulfill one or more requests.

CPU 702 may include scheduler 704, KV cache manager 706, and memory 712 coupled to or is local to CPU 702. GPU worker 730 may include compute 732 and KV cache 734 coupled to or is local to compute 732.

Scheduler 704 may coordinate the execution of requests by the distributed GPU workers, such as GPU worker 730. The requests may include requests to perform one or more operations of a transformer-based neural network. The coordination performed by scheduler 704 may be based on availability of resources on GPU worker 730 and the operations of the transformer-based neural network to be executed by the distributed GPU workers.

KV cache manager 706 can manage KV caches of the distributed GPU workers (e.g., KV cache 734) in a paged fashion. KV cache manager 706 can manage KV cache 734 through the instructions sent by scheduler 704. The instructions can be included in requests (scheduled by scheduler 704) being sent to and to be executed by compute 732 of GPU worker 730. KV cache manager 706 enables storing key tensors and value tensors for a sequence of tokens in non-contiguous memory space of GPU worker 730. A cache engine (not shown) of GPU worker 730 may allocate a continuous chunk of the memory coupled to or is local to compute 732 to serve as KV cache 734. The cache engine may then divide KV cache 734 into fixed-sized blocks. A block of the physical KV cache 734 may store key tensors and value tensors for a fixed number of tokens (which may be referred to as a KV block size). Similarly, a memory engine (not shown) of CPU 702 may allocate a chunk of memory 712 in CPU 702 for GPU worker 730, or a chunk of memory 712 in memory 712 for a particular request.

KV cache manager 706 may include page to block tables 708. Similar to virtual memory in operating systems, KV cache manager 706 may map a request's logical KV cache pages to blocks in the physical KV cache 734 in page to block tables 708. Page to block tables 708 may include tables that stores the mapping between logical KV cache pages to blocks in KV cache 734 for respective requests. In some embodiments, an entry in the table may record a corresponding location, memory address, or identifier of a physical block in KV cache 734 that corresponds to a logical KV cache page. In some embodiments, the entry may further include the number of filled positions, or availability of space within a block. As a result, contiguous logical KV cache pages corresponding to a sequence of tokens can be mapped to non-contiguous blocks in KV cache 734, but at the same time, compute 732 executing a particular request can access KV cache 734 as though the memory was contiguous. In addition, separating logical KV cache pages and physical blocks allows KV cache manager 706 to grow KV cache 734 without having to reserve a large chunk of memory on GPU worker 730 (for the maximum possible generated sequence length) in advance.

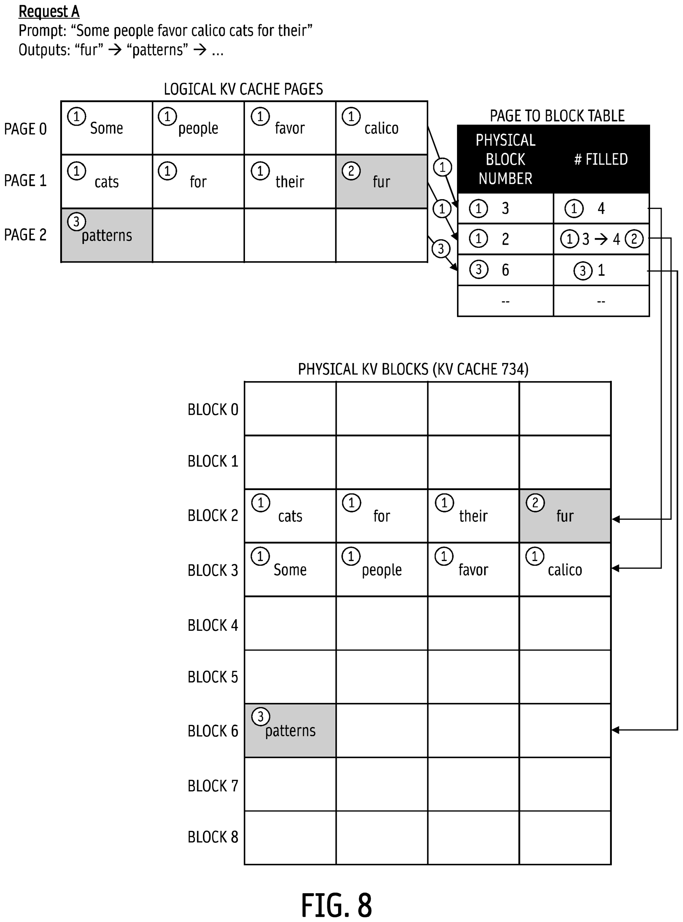

Scheduler 704 may cause one or more KV cache pages to be streamed to GPU worker 730 to swap-in or store the one or more KV cache pages on KV cache 734. Scheduler 704 may include information, such as a page to block table in page to block tables 708 for a particular request, in instructions or messages to GPU worker 730 to allow compute 732 to fetch logical KV cache pages from KV cache 734 at appropriate memory locations/addresses/block identifiers when compute 732 is fulfilling the request. During the attention computation being performed by compute 732, compute 732 may be instructed by instructions sent by scheduler 704 to fetch cached key tensors and value tensors at one or more specified locations/addresses in KV cache 734. A more detailed illustration of the KV cache paging scheme is described with FIG. 8.

As number of requests and output tokens grow, KV cache 734 may run out of physical KV blocks to store the newly generated key tensors and value tensors. Block allocation 710 may be implemented in KV cache manager 706 to perform eviction and swapping. Block allocation 710 may implement an eviction policy to determine whether to evict a particular KV cache page from a physical KV block in KV cache 734. Block allocation 710 may copy one or more evicted KV cache pages (e.g., KV cache pages of a request) to memory 712, such as to a swap space allocated in memory 712 for a particular request. Block allocation 710 may manage or track KV cache pages swapped to memory 712. If KV cache 734 runs out of space, block allocation 710 may select a set of KV cache pages associated with a sequence of tokens of a request to evict and transfer the KV cache pages from KV cache 734 to memory 712. When compute 732 completes other outstanding requests and frees up KV cache pages of the completed requests from KV cache 734, the KV cache pages previously evicted and copied to memory 712 may be swapped-in (copied back to KV cache 734) to allow the request to complete using the KV cache pages in KV cache 734.

FIG. 8 illustrates a KV cache paging scheme, according to some embodiments of the disclosure. A GPU worker (such as GPU worker 730 of FIG. 7) may receive a request to produce one or more output tokens in response to an input prompt: "Some people favor calico cats for their". The one or more output tokens may include: "fur" → "patterns" → ...

As illustrated in FIG. 8, KV cache 734 of the GPU worker executing one or more requests may store continuous key tensors and value tensors in non-contiguous memory space. A particular request may have one or more logical KV cache pages, and a page to block table that is associated with the particular request. KV cache 734 may be partitioned into fixed-sized blocks, shown as BLOCK 0, BLOCK 1, BLOCK 2, BLOCK 3, BLOCK 4, BLOCK 5, BLOCK 6, BLOCK 7, and BLOCK 8. A fixed-sized block can store key tensors and value tensors for a fixed number of tokens. As shown in the example of FIG. 8, a block in KV cache 734 may store key tensors and value tensors for four tokens. The key tensors and value tensors to be cached for the particular request may be organized as contiguous fixed-sized logical KV cache pages, shown as PAGE 0, PAGE 1, and PAGE 2. A logical KV cache page can correspond to key tensors and value tensors for a fixed number of tokens (e.g., four tokens in the example of FIG. 8). As shown, PAGE 0, PAGE 1, and PAGE 2 are not contiguous on physical KV cache 734.

Different parts of the KV cache paging process are illustrated by numbered circles, 1, 2, and 3.

In part 1 (a prefill operation), the input prompt has seven tokens, and a KV cache manager (KV cache manager 706 of FIG. 7) may map two logical KV cache pages, PAGE 0 and PAGE 1, to physical KV blocks of KV cache 734, BLOCK 3 and BLOCK 2 respectively. The mapping may be stored in a page to block table (e.g., in page to block tables 708 of FIG. 7). The key tensors and value tensors computed for the seven tokens (e.g., "Some people favor calico cats for their") may be produced by the GPU worker according to an attention mechanism. The key tensors and value tensors computed for the first four tokens (represented as PAGE 0) are stored in BLOCK 3, and key tensors and value tensors computed for the next three tokens (represented as PAGE 1) are stored in BLOCK 2. Note that BLOCK 2 has a remaining slot or free position that isn't used. Page to block table stores a mapping of PAGE 0 to BLOCK 3, and a mapping of PAGE 1 to BLOCK 2. Page to block table may store a number of positions filled for respective logical KV cache pages (e.g., 4 positions filled for PAGE 0, 3 positions filled for PAGE 1).

In part 2 (an autoregressive decoding operation), an output token, "fur", is generated using the cached key tensors and value tensors stored in BLOCK 3 and BLOCK 2. Since one slot/position remains available in PAGE 1, the key tensors and value tensors produced for the output token, "fur", is stored in BLOCK 2. The number of positions filled for PAGE 1 in the page to block table may be updated to reflect that all four positions are now filled for PAGE 1.

In part 3 (a further autoregressive decoding operation), a further output token, "patterns", is generated using the cached key tensors and value tensors stored in BLOCK 3 and BLOCK 2. Since no slot/position are available in PAGE 1 (or PAGE 1 is filled), a new logical KV cache page, PAGE 2, is designated for storing the key tensors and value tensors produced for the output token, "patterns". A new physical KV block, BLOCK 6, may be allocated in KV cache 734 to store PAGE 2. Page to block table stores a mapping of PAGE 0 to BLOCK 3, a mapping of PAGE 1 to BLOCK 2, and a mapping of PAGE 2 to BLOCK 6. The number of positions filled for PAGE 2 in the page to block table may be set to reflect that one position is filled for PAGE 2.

During the attention computation in the autoregressive decoding operation, the desired cached key tensors and value tensors can be fetched efficiently (from a global shared memory such as memory 712 of FIG. 7) into the GPU worker local memory (such as KV cache 734). The GPU worker can then use the cached tensors in the GPU worker local memory to perform operations of the attention mechanism and fulfill a request. The cached key tensors and value tensors can remain in the GPU worker local memory until the request is completed by the GPU worker or until the cached key tensors and value tensors are to be evicted or swapped-out.

When physical KV blocks in KV cache 734 are dynamically allocated to store logical KV cache pages as more output tokens and their key tensors and value tensors are produced (and new physical KV blocks are allocated only when previous physical KV blocks are full), the KV cache paging scheme limits memory waste and can effectively utilize all the memory. Since each request will not need the maximum context length, this approach allows for sharing of memory across different requests in a batch (hence increasing batch size and throughput), which reduces the wasted memory and memory fragmentation of the KV cache 734.

*Non-critical path in the lifetime of a logical KV cache page presents an opportunity*

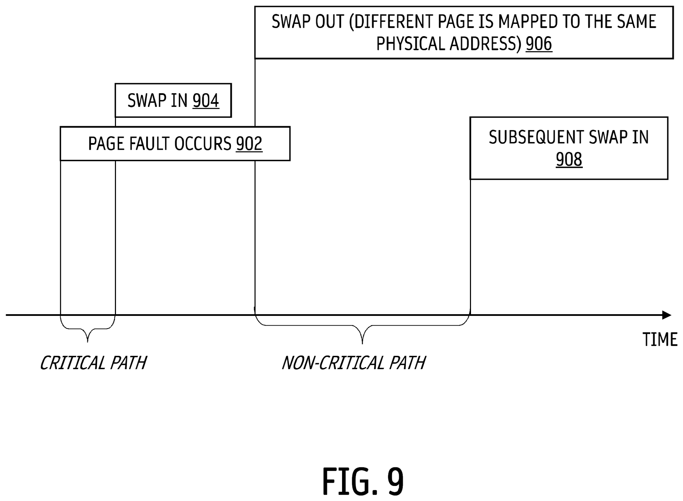

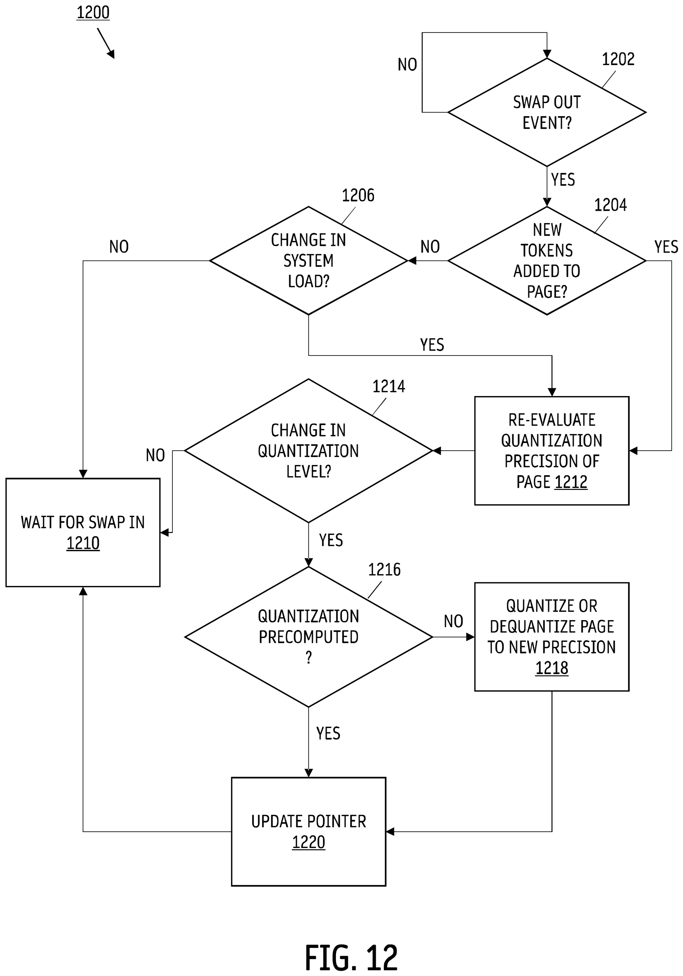

As discussed in the overview, one observation of the KV cache paging systems is that there is a critical path and a non-critical path in the lifetime of a KV cache page. FIG. 9 illustrates a non-critical path in the case of a KV cache swap-out event, according to some embodiments of the disclosure. A particular block is swapped-in response to a page fault (or cache miss) occurring (in 902). A page fault may occur when a compute process (e.g., compute 732 of FIG. 7) tries to access a logical KV cache page, and the logical KV cache page does not exist in physical KV cache (e.g., KV cache 734 of FIG. 7). Swapping in (in 904) involves loading the logical KV cache page onto physical KV cache (e.g., from CPU shared memory such as memory 712 of FIG. 12) and making the logical KV cache page available to the compute process to complete a request and generate tokens one at a time. The timing between the page fault occurring and the swapping in of the logical KV cache page represents a critical path because the timing impacts inference throughput. In addition, during the critical path, the centralized scheduler (e.g., block allocation 710 in CPU 702 of FIG. 7) is busy performing the swapping in operation (e.g., copying the logical KV page from memory 712 to KV cache 734). The logical KV cache page may remain in the physical KV cache until a swap-out event, which involves copying the logical KV cache page to a swap space on the CPU shared memory and the logical KV cache page is evicted to the CPU shared memory. A swap-out event (in 906) may occur due to the lack of available space in the physical KV cache, and the logical KV cache page is evicted. A different logical KV cache page may be mapped to the same physical block in the physical KV cache when a swap-out event occurs. The timing between the logical KV cache page being swapped-out until the subsequent swap-in (in 908) of the logical KV cache page represents a non-critical path. During the non-critical path, the centralized scheduler stays almost idle until the subsequent swap-in. Phrased differently, the centralized scheduler has available cycles that can be utilized to optimize utilization of the physical KV cache. Moreover, during the non-critical path, the logical KV cache page that was swapped-out is not being used for attention computation, until the subsequent swap-in (in 908).

KV cache paging schemes, such as the one illustrated in FIGS. 7-9, optimize the memory management and allocation strategy for the KV caches. Instead of allocating memory for maximum context length leading to huge fragmentation and wasted, these schemes handle KV cache memory management at a finer granularity by allocating memory at a fixed-size and relatively small memory chunks called physical KV blocks. Each block can store the cached key tensors and value tensors for a fixed number of tokens. If appropriate, a block can be shared across different requests. The KV cache pages can be swapped-in or out of the KV cache dynamically according to the demand. Hence, the allocation and the small block size alleviates memory fragmentation and reduces waste.

*Dynamic variable quantization*

Because the content of different KV cache pages are not of equal importance (some tokens have higher attention scores and can have a higher effect on inference performance), there is an opportunity to dynamically compress and quantize KV cache pages based on their contents and their importance scores. KV compression schemes take advantage of the attention patterns across the cache context and the attention layers. Typically, only a handful tokens in the sequence contribute the most to the attention scores (referred to herein as pivotal tokens) while the rest of the tokens contribute very little to the inference output. In some scenarios, compression technologies will only keep the KV cache pages associated with pivotal tokens and discard the rest allowing for smaller size of KV caches.

Instead of discarding non-pivotal tokens, it is possible to assign different quantization levels to different KV cache pages based on the importance scores of the KV cache pages. KV cache pages with higher importance scores may be quantized at a higher precision, and KV cache pages with lower importance scores may be quantized at a lower precision. In addition, the set of quantization levels mapped to different ranges of importance scores can be used as a design knob to modify the level of compression in response to system load.

When KV cache pages are quantized at different precisions, it is possible to fit more logical KV cache pages onto the physical KV blocks in the KV cache at any given point in time. The GPU worker would then be able to service more requests and/or requests with longer sequence lengths at a given point in time. Being able to adjust and assign quantization levels based on importance scores and/or system load means that the KV cache compression ratios can be increased significantly and enable better LLM service. Furthermore, the CPU that is serving as a centralized scheduler to map the KV cache pages to physical blocks and control their quantization level can respond to system load and effectively implement dynamic proportional scaling to the system load during runtime.

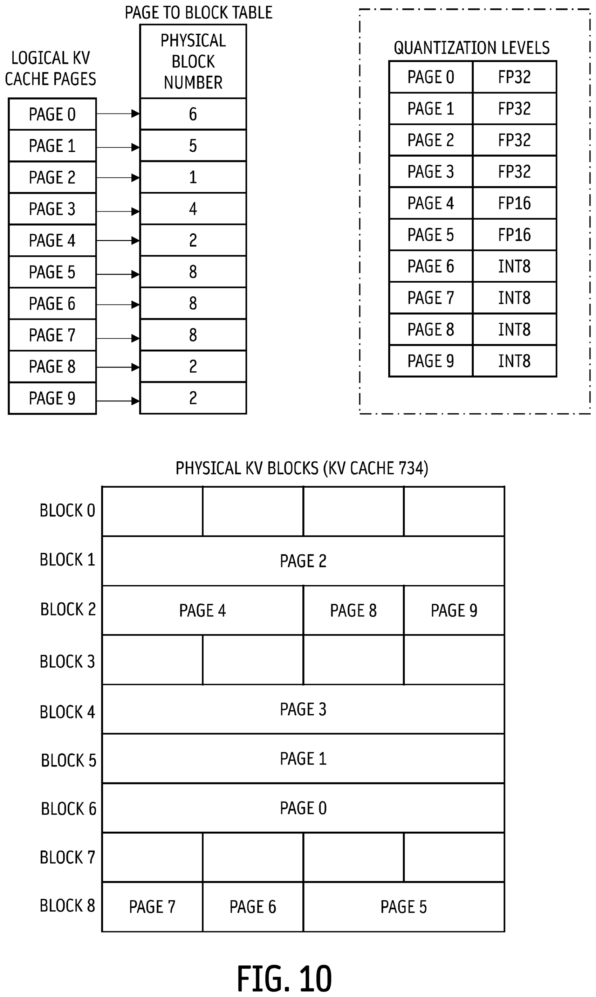

FIG. 10 illustrates a KV cache paging scheme with dynamic variable quantization, according to some embodiments of the disclosure. When different quantization levels are assigned for different KV cache pages being stored in the KV cache, more logical KV cache pages can be stored in a given physical memory space. In the illustrative example shown in FIG. 10, ten logical KV cache pages can be stored in six physical KV blocks (of KV cache 734 of FIG. 7). In contrast, using the implementation illustrated in FIG. 8, ten logical KV cache pages would require ten physical KV blocks (of KV cache 734 of FIG. 7).

The illustrative example shows that a request has ten logical KV cache pages: PAGE 0-9, and the KV cache has nine physical KV blocks available on the KV cache. Previously in the implementation illustrated in FIG. 8, one logical KV cache page is mapped to one physical KV block. Rather than quantizing the KV cache pages at the same quantization level, some KV cache page(s) are quantized at a specific quantization level while some other KV cache page(s) can be quantized at a different quantization level. In the illustrative example, PAGE 0, PAGE 1, PAGE 2, and PAGE 3 are quantized at FP32 (32 bits precision), PAGE 4 and PAGE 5 are quantized at FP16 (16 bits precision), and PAGE 6, PAGE 7, PAGE 8, and PAGE 9 are quantized at INT8 (8 bits precision). PAGE 0 may be mapped to and stored in BLOCK 6. PAGE 1 may be mapped to and stored in BLOCK 5. PAGE 2 may be mapped to and stored in BLOCK 1. PAGE 3 may be mapped to and stored in BLOCK 4. PAGE 4 may be mapped to and stored in BLOCK 2. PAGE 5 may be mapped to and stored in BLOCK 8. PAGE 6 may be mapped to and stored in BLOCK 8. PAGE 7 may be mapped to and stored in BLOCK 8. PAGE 8 may be mapped to and stored in BLOCK 2. PAGE 9 may be mapped to and stored in BLOCK 2. The mappings of logical KV cache pages to physical KV blocks can be stored in a page to block table.

In some embodiments, the page to block table may include two columns, logical KV cache page number, and physical KV block number. One row may include $0 \rightarrow 6$, another row may include $1 \rightarrow 5$, another row may include $2 \rightarrow 1$, and so forth as depicted. When a specific logical KV cache number is requested or looked up using the page to block table, the (physical) memory address corresponding to the physical KV block number in the physical KV cache 734 is determined. A load instruction for loading the logical KV cache having the logical KV cache number may include the memory address to enable the GPU worker to fetch the logical KV cache page from KV cache 734.

When KV cache pages are quantized at the respective quantization levels and stored in the KV cache, the KV cache pages can align on a sub-block boundary in the KV cache. A given KV cache page can be loaded with one load instruction irrespective of its quantization level. Advantageously, the scheme will allow for more logical KV pages to simultaneously exist in the GPU physical memory (the KV cache 734) before a swapping operation is needed. As a result, the reduction of times the swapping happens would lead to a direct increase in the LLM serving throughput especially that page swapping time is the biggest overhead and the major bottleneck for the inference phase (as illustrated in FIG. 9 as the critical path).

In some embodiments, loading of KV cache pages from KV cache 734 and storing of KV cache pages in KV cache 734 can be performed at a specific granularity (e.g., based on memory bus width). For logical KV cache page in the page to the block table, load or store instructions can include a start address and end address. The start address can indicate that the logical KV cache page may start at a specific physical address of KV cache 734. The end address can end at a further specific physical address of KV cache 734. The GPU can execute a load or store instruction (e.g., with one or more loads or stores depending on bus width) to load/store the logical KV cache page from the start address until the end address. For example, the GPU can load one or more logical KV cache pages using one or more start addresses and one or more end addresses to load the one or more logical KV cache pages onto KV cache 734 (e.g., the local memory of the GPU), and uses the one or more logical KV cache pages in attention computation. Referring back to the example illustrated in FIG. 10, to load ten logical KV cache pages: PAGE 0-9, start addresses and end addresses of BLOCK 1, BLOCK 2, BLOCK 4, BLOCK 5, BLOCK 6, and BLOCK 8 may be provided to the GPU. In some implementations, to load a given logical KV cache page, start address and end address (at the block boundary or at the sub-block boundary) may be provided to the GPU. In some cases, the GPU is not waiting on loading all the logical KV cache pages to complete before starting the attention computation. The loading can be performed in parallel with attention computation and loads interleaving.

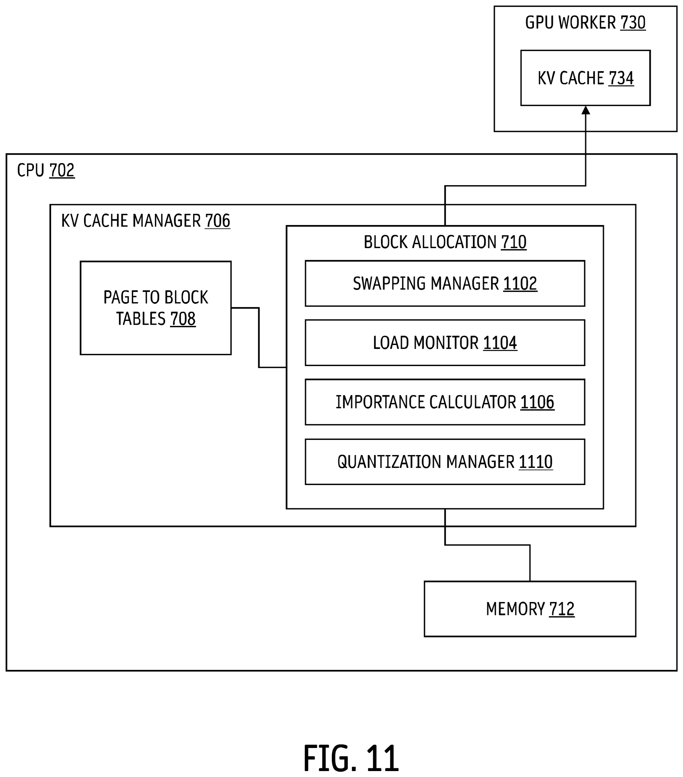

FIG. 11 illustrates a KV cache manager to implement dynamic variable quantization, according to some embodiments of the disclosure. KV cache manager 706 has block allocation 710 as illustrated in FIG. 7. Block allocation 710 may include: swapping manager 1102, load monitor 1104, importance calculator 1106, and quantization manager 1110.

Swapping manager 1102 may implement swap-in and swap-out of logical KV cache pages as described with FIG. 7. Swapping manager 1102 may alert one or more other components, such as importance calculator 1106, that a non-critical path has started based on a swap-out event occurring with a KV cache page. Swapping manager 1102 may update pointers (e.g., memory addresses) referencing where a KV cache page is stored in memory 712 (such as a swap space allocated in memory 712). Swapping manager 1102 may update entries of page to block tables 708 based on swap-in and swap-out events occurring to update where a KV cache page is stored in KV cache 734.

Load monitor 1104 may cooperate with a scheduler (scheduler 704 of FIG. 7) to determine whether the system load (e.g., a number of outstanding requests) is high or is expected to be high. Load monitor 1104 may cooperate with the scheduler to determine whether the system load (e.g., a number of outstanding requests) is low or is expected to be low. Load monitor 1104 may classify whether system load is high or low based on the number of outstanding requests. Load monitor 1104 may alert one or more other components, such as quantization manager 1110, that system load has changed to trigger a quantization level to be reevaluated or updated.

Importance calculator 1106 may determine an importance score of a logical KV cache page based on one or more attention scores of one or more tokens. During runtime, importance calculator 1106 determines an importance score of a pivotal page based on the relative importance of the pivotal page to other logical KV pages. In some cases, importance calculator 1106 determines an importance score of a pivotal page based on how many pivotal tokens the pivotal page has. Importance calculator 1106 may perform computations to determine the attention scores. Importance calculator 1106 may use the attention scores to classify whether a token is a pivotal token or not. In some embodiments, the attention scores are based on the raw attention scores computed in the attention mechanism/head. In some embodiments, the attention scores are based on the normalized version of the raw attention scores or the attention weights. In some embodiments, the attention scores are based on other measurements of a token's contribution to the final output of the attention mechanism/-head.

Given a set of tokens, X, corresponding to the cached key tensors and value tensors of a logical KV cache page, $P_k$, $a(X_i)$ returns the attention score for a token, $X_i$. Attention score of a token can be calculated by importance calculator 1106 in a suitable manner. Other similar statistics/measures about the contribution or impact to inference quality can be used in place of or with the attention score. A threshold, $\tau$, can be used by importance calculator 1106 to classify pivotal and non-pivotal (unimportant) tokens. Importance calculator 1106 can apply the threshold, $\tau$, to the attention score for a token. The threshold $\tau$ can be a hyperparameter that is set based on one or more factors, such as expected sequence token length, physical memory budget, a limit to the proportion of tokens being classified as pivotal, etc. The threshold $\tau$ can be a hyperparameter that is set based on a probability distribution of attention scores of tokens, and a target percentage of tokens to be classified as pivotal/non-pivotal. If an attention score of a token, $a(X_i)$ is greater than the threshold $\tau$, then the token is considered to be a pivotal token. **If** an attention score of a token, $a(X_i)$ is less than the threshold $\tau$, then the token is considered to be a non-pivotal token.

Based on the attention scores of the tokens corresponding to a logical KV cache page and/or whether the KV cache page has at least one pivotal token, importance calculator 1106 can determine whether a logical KV cache page is a pivotal page or non-pivotal page. In some embodiments, an importance score can be determined by importance calculator 1106 based on the attention scores of the tokens corresponding to the pivotal page, and/or a number of pivotal tokens in the pivotal page.

Quantization manager 1110 may determine a quantization level based on the importance score determined by importance calculator 1106. In some embodiments, quantization manager 1110 can assign a default precision (e.g., a lowest precision or quantization level with the highest amount of compression) the non-pivotal page. Based on the importance score of a pivotal page, quantization manager 1110 can assign a quantization precision (e.g., a quantization level with a specific of compression or no compression) to the pivotal page according to a set of quantization precisions/levels, Q, with each of its members under a priority relation:

$$Q = \{q1, q2, q3, \ldots, qb\}$$

*where xi < xj $\Leftrightarrow$ i < j*
where $q1$ is the lowest allowed precision or quantization level (utilizing least number of bits or has a highest amount of compression), and *qb* is the highest allowed precision (utilizing most number of bits or has a lowest amount of compression). In some cases, the set of quantization levels, *Q*, can correspond to different ranges of importance scores. The set of quantization levels, *Q*, can be used to assign a quantization level to a pivotal page, based on the importance score of the pivotal page. **If** an importance score of a pivotal page falls within a specific range of importance scores corresponding to a specific quantization level, the specific quantization level may be assigned to the pivotal page.

Referring back to the operations of importance calculator 1106, a logical KV cache page, $P_k$, can be considered unimportant/non-pivotal if and only if $\forall x (x \in P_k \Rightarrow a(x) < \tau)$. This means that a logical KV cache page is considered to be a non-pivotal page if all the tokens have an attention score smaller than a threshold $\tau$, or if all the tokens are non-pivotal tokens. Importance calculator 1106 may determine whether at least one of the one or more attention scores is greater than a threshold $\tau$. In response to determining that none of the one or more attention scores is greater than the threshold $\tau$, the KV cache page may be considered a non-pivotal page.

In some embodiments, the unimportant/non-pivotal pages are assigned by quantization manager 1110 to have a quantization level *q*1.

A logical KV cache page, $P_k$, is considered pivotal if and only if $\exists x (x \in P_k \wedge a(x) > \tau)$. This means that a logical KV cache page is considered to be a pivotal page if one or more of the tokens have an attention score greater than a threshold $\tau$, or if one or some of the tokens are pivotal tokens. Importance calculator 1106 may determine whether at least one of the one or more attention scores is greater than a threshold $\tau$. In response to determining that at least one of the one or more attention scores is greater than the threshold $\tau$, the KV cache page may be considered a pivotal page.

Importance calculator 1106 may determine an importance score for a pivotal page, or a logical KV cache page, $P_k$, based on the relative relevance/importance of a given pivotal page among other pivotal pages, or among all the KV cache pages of interest.

$$Importance(P_k) = \frac{piv(P_k)}{\sum_{i=1}^{N} piv(P_i)} \textbf{ (eq. 3)}$$

where $piv(P_k)$ counts the number of pivotal tokens in a KV cache page, and *N* is the number of KV cache pages of interest (e.g., KV cache pages of a request, KV cache pages of one or more requests associated with a particular user, all KV cache pages in a KV cache of a GPU worker, all pivotal pages, etc.). In some embodiments, importance calculator 1106 may determine a ratio of a count of pivotal tokens in the KV cache page (e.g., $piv(P_k)$) and a sum of counts of pivotal tokens of KV cache pages of interest (e.g., $\sum_{i=1}^{N} piv(P_i)$), such as all the pivotal pages or KV cache pages associated with the request.

Finally, quantization manager 1110 may sort the KV cache pages of interest (e.g., KV cache pages of a request, KV cache pages of one or more requests associated with a particular user, all KV cache pages in a KV cache of a GPU worker, all pivotal pages, etc.), in ascending order of importance scores, and assign the quantization level to the KV cache pages based on the remaining (b - 1) buckets of possible precisions in Q, e.g., *q2,q3,...,qb.* Quantization manager 1110 may assign quantization levels based on the importance score determined by importance calculator 1106 in a manner such that higher importance scores correspond to more bits assigned for the KV cache page in order to maximize the model inference accuracy.

The set of quantization levels used by quantization manager 1110 to assign a quantization level to a particular KV cache page is a design knob that can be set by the system administrator based on the maximum error tolerance, total physical memory available, and maximum concurrent load target, etc. The set of quantization levels can be set initially by the system administrator. One example of the set of quantization levels can include: FP32 being mapped to a first range of importance scores (max range), FP16 being mapped to a second range of importance scores (next smaller range), INT8 being mapped to a third range of importance scores (next-next smaller range), and INT4 being mapped to importance scores being zero (e.g., non-pivotal pages).

In some embodiments, the range/set of quantization levels, and how they are mapped to different ranges of importance scores, can impact the tradeoffs being made between inference accuracy and memory footprint (and service throughput). In some embodiments, quantization manager 1110 may change the set of quantization levels being used, based on one or more triggers/conditions. For instance, one set of quantization levels may optimize for inference accuracy. Another set of quantization levels may optimize for memory footprint. By changing or revising the set of quantization levels, the KV cache memory footprint can be scaled proportionally or in response to the load in order to better fit the system performance in response to demand. When the total load on the system is high (too many input requests per second), quantization manager 1110 may reduce the quantization range offered in the set of quantization levels to restrict quantization into less number of bits which will satisfy the offered load at the expense of less accuracy (within a tolerance margin, determined per model). On the other hand, when the system load is low, quantization manager 1110 may expand or stretch the quantization range offered in the set of quantization levels to allow for less restrictive quantization which will improve the overall accuracy at the expense of a higher memory usage (within the physical memory budget of worker threads).

If load monitor 1104 alerts quantization manager 1110 that system load has changed, quantization manager 1110 may select a different set of quantization levels to be used. For instance, if system load is low, quantization manager 1110 may select a set of quantization levels which optimizes inference accuracy. If system load is high, quantization manager 1110 may select a set of quantization levels which optimizes memory footprint.

Quantization manager 1110 may perform quantization of KV cache pages or modify the precision level of KV cache pages. In some embodiments, the original (unquantized) copy of the KV cache page is stored in the CPU memory (memory 712) which can be accessed by quantization manager 1110 when a KV cache page for a new quantization level is to be computed, or when quantization is to be performed.

Quantization manager 1110 may quantize a KV cache page according to an assigned quantization level, such as changing the precision of the KV cache page from a current quantization level to the assigned quantization level. Quantization manager 1110 may retrieve the original KV cache page from memory 712 and perform quantization on the original KV cache page to obtain the KV cache page quantized at the assigned quantization level. Quantization manager 1110 may de-quantize a KV cache page to an assigned quantization level, such as to retrieve the KV cache page that is quantized at the assigned quantization level from CPU memory (e.g., memory 712).

The (de)quantization computation load is not high (a series of multiplications and adds) and can be handled by the CPU cores efficiently. A further improvement can make this computation overhead negligible. This improvement is based on the insight that the KV cache page content once full can remain unchanged with the same tokens. As a result, all the quantization levels (for example, 5 levels, INT2, INT4, INT8, FP16, FP32) can be computed once and stored in a hash table map in CPU memory (memory 712). During normal operation and if a new quantization level is needed for a certain KV cache page, the CPU does not need to compute this new representation, but rather quantization manager 1110 can update the pointer referencing the precomputed block at the new quantization level, which is a very negligible overhead.

In some embodiments, the KV cache page at different quantization levels (as offered in the set of quantization levels) may be precomputed. For example, quantization manager 1110 may compute the KV cache page at an original precision, and one or more quantization levels (e.g. converting the KV cache page from FP32 to FP16, converting the KV cache page from FP32 to INT8, etc.). Quantization manager 1110 may store the KV cache pages quantized at different quantization levels in memory 712. When a particular quantization level is assigned to a KV cache page, quantization manager 1110 may update a pointer referencing the KV cache page quantized at the assigned quantization level in memory 712. When the KV cache page is being swapped-in to KV cache 734, the KV cache page quantized at the assigned quantization level can be retrieved from memory 712 and sent to KV cache 734. KV cache manager 706 can access the KV cache page quantized at the quantization level in memory 712 (when the pointer is updated) and provide the KV cache page quantized at the quantization level to KV cache 734.

As previously mentioned, the importance score of a KV cache page can be dynamic with different layers, with different heads, and with time as new tokens are generated. It would be beneficial to have the ability to modify the quantization level assigned to a KV cache page as the importance score changes for a token to reflect the dynamic nature token attention scores, as well as the overall system load. The availability of a non-critical path (as illustrated in FIG. 9) allows reevaluation of the quantization level of KV cache pages to be done almost negligible overhead. Specifically, reevaluation of the quantization level for KV cache pages can be performed with low-overhead by making use of the CPU idle cycles in the case of a KV cache swap-out event. As previously with FIG. 9, swap-out event is not on the critical path, and CPU cycles can be used to compute that new quantization level of the given KV cache page, and to update the pointer reference to a new CPU physical memory address having the KV cache page at the new quantization level. The reevaluation and update can be performed while the CPU is waiting for the subsequent swap-in event for that specific KV cache page to fetch the KV cache page quantized at the new quantization level at the new CPU physical memory address.

FIG. 12 is a flowchart illustrating method 1200 for KV caching with dynamic variable quantization, according to some embodiments of the disclosure. Method 1200 may be implemented in the CPU (e.g., CPU 702, KV cache manager 706, block allocation 710, etc.), using the CPU idle cycles. Method 1200 can be performed using a computing device, such as computing device 1400 in FIG. 14. Method 1200 may be performed using one or more parts of CPU 702 as illustrated FIG. 11. Method 1200 may be an exemplary method performed by KV cache manager 706 as described herein.

Operations in method 1200 can be triggered with a swap-out event of a KV cache page. In 1202, method 1200 routinely checks or monitors whether a swap-out event of a KV cache page has occurred, which marks the beginning the non-critical path and at that specific time, one or more triggers can be checked to determine whether the quantization level of the KV cache page should be updated or reevaluated. If YES, method 1200 may proceed to 1204. If NO, method 1200 returns to 1202.

One or more triggers may cause method 1200 to determine whether the KV cache page should have a new quantization level (or stays the same).

In 1212, method 1200 is triggered to reevaluate the quantization level/precision of the KV cache page, e.g., including (re)computing its relative importance to the other KV cache pages. Reevaluation of the quantization level may include determining a quantization level based on an importance score of the KV cache page. Reevaluation of the quantization level may include determining a quantization level using a revised set of quantization levels corresponding to different ranges of importance values (with or without recomputing an importance score of the KV cache page).

In 1204, method 1200 may determine whether one or more new tokens have been added to are present in the KV cache page. One or more new tokens being added may be a trigger for method 1200 to proceed to 1212. In other words, determining the importance score of the KV cache page may be performed in response to one or more new tokens being present to the KV cache page. If YES, method 1200 proceeds to 1212. If NO, method 1200 may proceed to 1206.

In 1206, method 1200 may determine whether system load has changed. A change in system load may be a trigger for method 1200 to proceed to 1212. In other words, determining the importance score of the KV cache page and/or determining the quantization level of the KV cache page may be performed in response to a change in system load. If YES, method 1200 proceeds to 1212. If NO, method 1200 proceeds to 1210.

In 1210, method 1200 awaits for a swap-in event to occur for the KV cache page. The CPU can fetch the KV cache page stored in CPU memory and copy the KV cache page to the GPU memory (e.g., the KV cache) in response to a swap-in event.

In 1212, reevaluation of quantization precision of the KV cache page may include making a decision to keep the quantization level the same, to further quantize the KV cache page (in case the relative importance gets lower or at very high system load), or to dequantize the KV cache page (in case a new token is inserted in the KV cache page that increased its relative importance, or the end-to-end system is lightly loaded).

In 1214, a check is performed to determine whether the quantization level has changed based on the result of 1212. If YES, method 1200 may proceed to 1216. If NO, method 1200 may proceed to 1210.

In 1216, a check is performed to determine whether the KV cache page at different quantization levels in the set of quantization levels have been precomputed and stored in CPU memory. If YES, method proceeds to 1220. If NO, method proceeds to 1218.

In 1218, the CPU may quantize or dequantize the KV cache page to the new quantization level/precision. The newly quantized KV cache page may be stored in CPU memory. Method 1200 proceeds to 1220.

In 1220, the pointer is updated or modified to reflect the new address of the KV cache page in CPU memory (in case the quantization level has changed). Method 1200 proceeds to 1210. The (new) address will be used to swap-in the KV cache page to the GPU memory the next time that KV cache page is accessed by the GPU worker to fulfill a request.

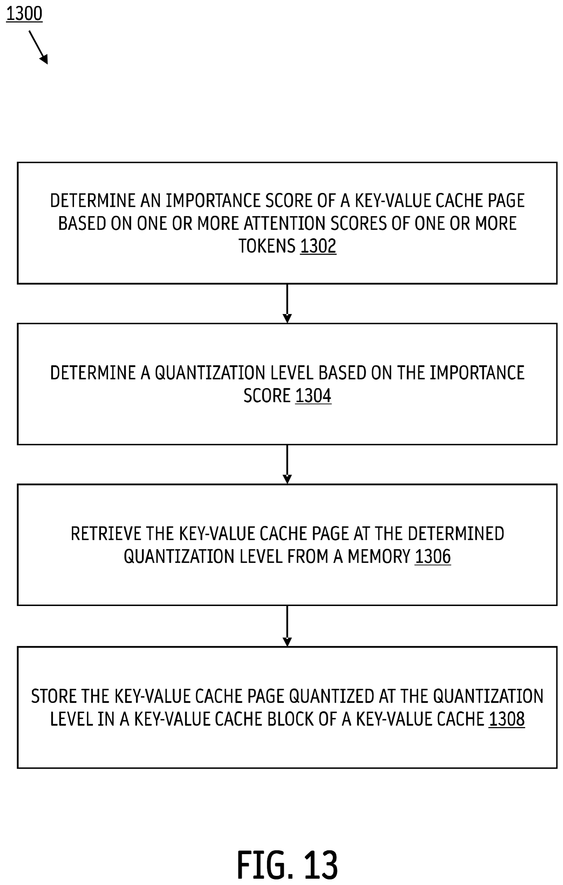

FIG. 13 is a flowchart illustrating another method for KV caching with dynamic variable quantization, according to some embodiments of the disclosure. Method 1300 may be implemented in the CPU (e.g., CPU 702, KV cache manager 706, block allocation 710, etc.), using the CPU idle cycles. Method 1300 can be performed using a computing device, such as computing device 1400 in FIG. 14. Method 1300 may be performed using one or more parts of CPU 702 as illustrated FIG. 11. Method 1300 may be an exemplary method performed by KV cache manager 706 as described herein.

In 1302, an importance score of a key-value cache page may be determined. The key-value cache page represents a chunk of data that can be stored in a key-value cache. The importance score may be determined based on one or more attention scores of one or more tokens. The key-value cache page can include one or more key tensors and one or more value tensors calculated for the one or more tokens. The one or more tokens may be at least a part of a request for a computing processor (e.g., a GPU worker) to perform one or more operations of a neural network, such as a transformer-based neural network (e.g., an LLM). The one or more key tensors and one or more value tensors may be calculated by an attention head of a neural network.

In 1304, a quantization level may be determined based on the importance score.

In 1306, the key-value cache page at the determined quantization level may be retrieved from a memory. In some embodiments, a memory pointer is updated to reference or refer to the key-value cache page quantized at the quantization level. In some embodiments, the key-value cache page is quantized at different quantization levels. The key-value cache page at the original precision and the key-value cache page quantized at the different quantization levels are stored in a memory. The memory may include a swap space for storing precomputed key-value cache pages quantized at the different quantization levels and at the original precision.

In 1308, the key-value cache page quantized at the quantization level may be stored in a key-value cache block of a key-value cache. 1308 may be performed to swap-in the key-value cache page onto the key-value cache. The key-value cache may represent an allocated chunk of physical memory having fixed-sized physical key-value cache blocks. The key-value cache may be allocated to store key-value cache pages to facilitate reuse of key tensors and value tensors and avoid redundant computations. In some embodiments, multiple key-value cache pages may be stored in a single key-value cache block of the key-value cache because the quantization level can vary depending on the importance score of the KV cache page. Ability to store more than one key-value cache pages in a single key-value can increase KV cache compression, and better utilize the KV cache while mitigating accuracy loss. The KV cache may be part of a memory that is local to the computing processor that is executing one or more operations of the neural network. The key-value cache may be part of a memory that is local to the computing processor that is carrying out the attention mechanism of the attention head of a neural network.

*Exemplary computing device*

FIG. 14 is a block diagram of an apparatus or a system, e.g., an exemplary computing device 1400, according to some embodiments of the disclosure. One or more computing devices 1400 may be used to implement the functionalities described with the FIGS. and herein. A number of components illustrated in FIG. 14 can be included in the computing device 1400, but any one or more of these components may be omitted or duplicated, as suitable for the application. In some embodiments, some or all of the components included in computing device 1400 may be attached to one or more motherboards. In some embodiments, some or all of these components are fabricated onto a single system on a chip (SoC) die. Additionally, in various embodiments, computing device 1400 may not include one or more of the components illustrated in FIG. 14, and computing device 1400 may include interface circuitry for coupling to the one or more components. For example, the computing device 1400 may not include display device 1406, and may include display device interface circuitry (e.g., a connector and driver circuitry) to which a display device 1406 may be coupled. In another set of examples, computing device 1400 may not include audio input device 1418 or an audio output device 1408 and may include audio input or output device interface circuitry (e.g., connectors and supporting circuitry) to which an audio input device 1418 or audio output device 1408 may be coupled.

Computing device 1400 may include processing device 1402 (e.g., one or more processing devices, one or more of the same types of processing device, one or more of different types of processing device). Processing device 1402 may include electronic circuitry that process electronic data from data storage elements (e.g., registers, memory, resistors, capacitors, quantum bit cells) to transform that electronic data into other electronic data that may be stored in registers and/or memory. Examples of processing device 1402 may include a CPU, a GPU, a quantum processor, a machine learning processor, an artificial intelligence processor, a neural network processor, a neural processing unit (NPU), an artificial intelligence accelerator, an application-specific integrated circuit (ASIC), an analog signal processor, an analog computer, a microprocessor, a digital signal processor, a field-programmable gate array (FPGA), a tensor processing unit (TPU), a data processing unit (DPU), etc.

The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1404 includes one or more non-transitory computer-readable storage media. In some embodiments, memory 1404 may include memory that shares a die with the processing device 1402.

In some embodiments, memory 1404 includes one or more non-transitory computer-readable media storing instructions executable to perform operations described with the FIGS. and herein, such as the methods and operations illustrated in the FIGS. In some embodiments, memory 1404 includes one or more non-transitory computer-readable media storing instructions executable to perform operations of method 1200 of FIG. 12, and method 1300 of FIG. 13. Exemplary parts that may be encoded as instructions and stored in memory 1404 are depicted. Memory 1404 may store instructions that encode one or more exemplary parts, such as KV cache manager 706. The instructions stored in the one or more non-transitory computer-readable media may be executed by processing device 1402.

In some embodiments, memory 1404 may store data, e.g., data structures, binary data, bits, metadata, files, blobs, etc., as described with the FIGS. and herein. For example, memory 1404 may store page to block tables. Memory 1404 may store attention scores, and/or data used to compute the attention scores. Memory 1404 may store importance scores. Memory 1404 may store KV cache pages.

In some embodiments, the computing device 1400 may include a communication device 1412 (e.g., one or more communication devices). For example, the communication device 1412 may be configured for managing wired and/or wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1412 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1412 may operate in accordance with other wireless protocols in other embodiments. The computing device 1400 may include an antenna 1422 to facilitate wireless communications and/or to receive other wireless communications (such as radio frequency transmissions). The computing device 1400 may include receiver circuits and/or transmitter circuits. In some embodiments, the communication device 1412 may manage wired communications, such as electrical, optical, or any other suitable communication protocols (e.g., the Ethernet). As noted above, the communication device 1412 may include multiple communication chips. For instance, a first communication device 1412 may be dedicated to shorter-range wireless communications such as Wi-Fi or Bluetooth, and a second communication device 1412 may be dedicated to longer-range wireless communications such as global positioning system (GPS), EDGE, GPRS, CDMA, WiMAX, LTE, EV-DO, or others. In some embodiments, a first communication device 1412 may be dedicated to wireless communications, and a second communication device 1412 may be dedicated to wired communications.

The computing device 1400 may include power source / power circuitry 1414. The power source / power circuitry 1414 may include one or more energy storage devices (e.g., batteries or capacitors) and/or circuitry for coupling components of the computing device 1400 to an energy source separate from the computing device 1400 (e.g., DC power, AC power, etc.).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include a sensor 1430 (or one or more sensors). The computing device 1400 may include corresponding interface circuitry, as discussed above). Sensor 1430 may sense physical phenomenon and translate the physical phenomenon into electrical signals that can be processed by, e.g., processing device 1402. Examples of sensor 1430 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1400 may include another output device 1410 (or corresponding interface circuitry, as discussed above). Examples of the other output device 1410 may include an audio codec, a video codec, a printer, a wired or wireless transmitter for providing information to other devices, haptic output device, gas output device, vibrational output device, lighting output device, home automation controller, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile Internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1400 may be any other electronic device that processes data.

*Select examples*

Example 1 provides an apparatus, including one or more processors to execute one or more instructions; and a memory to store data and the one or more instructions, where the one or more instructions, when executed by the one or more processors, cause the one or more processors to: determining an importance score of a key-value cache page based on one or more attention scores of one or more tokens, the key-value cache page having one or more key tensors and one or more value tensors calculated for one or more tokens by an attention head of a neural network; determining a quantization level based on the importance score; retrieving the key-value cache page at the determined quantization level from the memory; and storing the key-value cache page quantized at the quantization level in a key-value cache block of a key-value cache.

Example 2 provides the apparatus of example 1, where the one or more instructions further cause the one or more processors to: updating a memory pointer to reference the key-value cache page quantized at the quantization level.

Example 3 provides the apparatus of example 1 or 2, where the one or more instructions further cause the one or more processors to: quantizing the key-value cache page at different quantization levels; and storing the key-value cache page quantized at the different quantization levels in the memory.

Example 4 provides the apparatus of any one of examples 1-3, where determining the importance score is performed in response to a swap-out event of the key-value cache page.

Example 5 provides the apparatus of any one of examples 1-4, where determining the importance score is performed in response to one or more new tokens being added to the key-value cache page.

Example 6 provides the apparatus of any one of examples 1-5, where determining the quantization level is performed in response to a change in a number of outstanding requests to be executed by the neural network.

Example 7 provides the apparatus of any one of examples 1-6, where determining the importance score includes determining whether at least one of the one or more attention scores is greater than a threshold.

Example 8 provides the apparatus of any one of examples 1-7, where determining the importance score includes determining a ratio of a count of pivotal tokens whose attention scores is greater than a threshold and a sum of counts of pivotal tokens of the key-value cache page and one or more further key-value cache pages.

Example 9 provides the apparatus of any one of examples 1-8, where determining the quantization level based on the importance score includes determining the quantization level according to a set of quantization levels, the set of quantization levels corresponding to different ranges of importance scores.

Example 10 provides the apparatus of example 9, where the set of quantization levels is determined based on one or more of: a maximum error tolerance, a total available memory of the key-value cache, a maximum concurrent load target, and a number of outstanding requests to be executed by the neural network.

Example 11 provides one or more non-transitory computer-readable media storing instructions executable by a computing processor to perform operations for memory management, the operations including determining an importance score of a key-value cache page based on one or more attention scores of one or more tokens, the key-value cache page having one or more key tensors and one or more value tensors calculated for one or more tokens by an attention head of a neural network; determining a quantization level based on the importance score; retrieving the key-value cache page at the determined quantization level from a memory; and storing the key-value cache page quantized at the quantization level in a key-value cache block of a key-value cache.

Example 12 provides the one or more non-transitory computer-readable media of example 11, where the operations further include updating a memory pointer to reference the key-value cache page quantized at the quantization level.

Example 13 provides the one or more non-transitory computer-readable media of example 11 or 12, where the operations further include quantizing the key-value cache page at different quantization levels; and storing the key-value cache page quantized at the different quantization levels in the memory.

Example 14 provides the one or more non-transitory computer-readable media of any one of examples 11-13, where determining the importance score is performed in response to a swap-out event of the key-value cache page.

Example 15 provides the one or more non-transitory computer-readable media of any one of examples 11-14, where determining the importance score is performed in response to one or more new tokens being added to the key-value cache page.

Example 16 provides the one or more non-transitory computer-readable media of any one of examples 11-14, where determining the quantization level is performed in response to a change in a number of outstanding requests to be executed by the neural network.

Example 17 provides the one or more non-transitory computer-readable media of any one of examples 11-16, where determining the importance score includes determining whether at least one of the one or more attention scores is greater than a threshold.

Example 18 provides the one or more non-transitory computer-readable media of any one of examples 11-17, where determining the importance score includes determining a ratio of a count of pivotal tokens whose attention scores is greater than a threshold and a sum of counts of pivotal tokens of the key-value cache page and one or more further key-value cache pages.

Example 19 provides the one or more non-transitory computer-readable media of any one of examples 11-18, where determining the quantization level based on the importance score includes determining the quantization level according to a set of quantization levels, the set of quantization levels corresponding to different ranges of importance scores.

Example 20 provides the one or more non-transitory computer-readable media of example 19, where the set of quantization levels is determined based on one or more of: a maximum error tolerance, a total available memory of the key-value cache, a maximum concurrent load target, and a number of outstanding requests to be executed by the neural network.

Example 21 provides a method for memory management, including determining an importance score of a key-value cache page based on one or more attention scores of one or more tokens, the key-value cache page having one or more key tensors and one or more value tensors calculated for one or more tokens by an attention head of a neural network; determining a quantization level based on the importance score; and storing the key-value cache page quantized at the quantization level in a key-value cache block of a key-value cache.

Example 22 provides the method of example 21, further including updating a memory pointer to reference the key-value cache page quantized at the quantization level.

Example 23 provides the method of example 21 or 22, further including quantizing the key-value cache page at different quantization levels; storing the key-value cache page quantized at the different quantization levels in a memory; and retrieving the key-value cache page quantized at the quantization level from the memory.

Example 24 provides the method of any one of examples 21-23, where determining the importance score is performed in response to a swap-out event of the key-value cache page.

Example 25 provides the method of any one of examples 21-24, where determining the importance score is performed in response to one or more new tokens being added to the key-value cache page.

Example 26 provides the method of any one of examples 21-25, where determining the quantization level is performed in response to a change in a number of outstanding requests to be executed by the neural network.

Example 27 provides the method of any one of examples 21-26, where determining the importance score includes determining whether at least one of the one or more attention scores is greater than a threshold.

Example 28 provides the method of any one of examples 21-27, where determining the importance score includes determining a ratio of a count of pivotal tokens whose attention scores is greater than a threshold and a sum of counts of pivotal tokens of the key-value cache page and one or more further key-value cache pages.

Example 29 provides the method of any one of examples 21-28, where determining the quantization level based on the importance score includes determining the quantization level according to a set of quantization levels, the set of quantization levels corresponding to different ranges of importance scores.

Example 30 provides the method of example 29, where the set of quantization levels is determined based on one or more of: a maximum error tolerance, a total available memory of the key-value cache, a maximum concurrent load target, and a number of outstanding requests to be executed by the neural network.

Example A includes an apparatus comprising means to perform any one of the methods in examples 21-30.

Example B includes a KV cache manager as described herein.

Example C includes a computing system having a scheduler, a KV cache manager, and a memory as described herein.

Example D includes the computing system of example C, and further comprising one or more distributed workers as described herein.

*Variations and other notes*

Although the operations of the example method shown in and described with reference to FIGS. 12-13 are illustrated as occurring once each and in a particular order, it will be recognized that the operations may be performed in any suitable order and repeated as desired. Additionally, one or more operations may be performed in parallel. Furthermore, the operations illustrated in FIGS. 12-13 may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. An apparatus, comprising:

   one or more processors to execute one or more instructions; and
   a memory to store data and the one or more instructions, wherein the one or more instructions, when executed by the one or more processors, cause the one or more processors to:

   determine an importance score of a key-value cache page based on one or more attention scores of one or more tokens, the key-value cache page having one or more key tensors and one or more value tensors calculated for one or more tokens by an attention head of a neural network;
   determine a quantization level based on the importance score;
   retrieve the key-value cache page at the determined quantization level from the memory; and
   store the key-value cache page quantized at the quantization level in a key-value cache block of a key-value cache.

2. The apparatus of claim 1, wherein the one or more instructions further cause the one or more processors to:
   updating a memory pointer to reference the key-value cache page quantized at the quantization level.

3. The apparatus of claim 1 or 2, wherein the one or more instructions further cause the one or more processors to:

   quantizing the key-value cache page at different quantization levels; and
   storing the key-value cache page quantized at the different quantization levels in the memory.

4. The apparatus of any one of claims 1-3, wherein determining the importance score is performed in response to a swap-out event of the key-value cache page.

5. The apparatus of any one of claims 1-4, wherein determining the importance score is performed in response to one or more new tokens being added to the key-value cache page.

6. The apparatus of any one of claims 1-5, wherein determining the quantization level is performed in response to a change in a number of outstanding requests to be executed by the neural network.

7. The apparatus of any one of claims 1-6, wherein determining the importance score comprises:
   determining whether at least one of the one or more attention scores is greater than a threshold.

8. The apparatus of any one of claims 1-7, wherein determining the importance score comprises:
   determining a ratio of a count of pivotal tokens whose attention scores is greater than a threshold and a sum of counts of pivotal tokens of the key-value cache page and one or more further key-value cache pages.

9. The apparatus of any one of claims 1-5, wherein determining the quantization level based on the importance score comprises:
   determining the quantization level according to a set of quantization levels, the set of quantization levels corresponding to different ranges of importance scores.

10. The apparatus of claim 9, wherein the set of quantization levels is determined based on one or more of: a maximum error tolerance, a total available memory of the key-value cache, a maximum concurrent load target, and a number of outstanding requests to be executed by the neural network.

11. A method for memory management, comprising:

    determining an importance score of a key-value cache page based on one or more attention scores of one or more tokens, the key-value cache page having one or more key tensors and one or more value tensors calculated for one or more tokens by an attention head of a neural network;
    determining a quantization level based on the importance score; and
    storing the key-value cache page quantized at the quantization level in a key-value cache block of a key-value cache.

12. The method of claim 11, wherein determining the importance score is performed in response to a swap-out event of the key-value cache page.

13. The method of claim 11 or 12, further comprising:

    quantizing the key-value cache page at different quantization levels;
    storing the key-value cache page quantized at the different quantization levels in a memory; and
    retrieving the key-value cache page quantized at the quantization level from the memory.

14. The method of any one of claims 11-13, wherein determining the quantization level based on the importance score comprises:
    determining the quantization level according to a set of quantization levels, the set of quantization levels corresponding to different ranges of importance scores, wherein the set of quantization levels is determined based on one or more of: a maximum error tolerance, a total available memory of the key-value cache, a maximum concurrent load target, and a number of outstanding requests to be executed by the neural network.

15. One or more non-transitory computer-readable media storing instructions executable by a computing processor to perform the method according to any one of claims 11-14.

100

GENERATED TEXT 116

DETOKENIZER(S) 114

NEW TOKEN    Y    182

CLASSIFIERS 112

TRANSFORMER BLOCK N

TRANSFORMER BLOCK 2

110

TRANSFORMER BLOCK 1

TRANSFORMER BLOCK 0

NEXT
INPUT
TOKEN

EMBEDDING(S)

108

X

106

TOKENIZER(S) 104

PROMPT 102

FIG. 1

200

208

X'

FEED FORWARD
NETWORK LAYERS 206

ATTENTION LAYERS 204

X
202

# FIG. 2

300

X' — 310

308

⊕

ATTENTION LAYERS 304

FEED FORWARD
NETWORK LAYERS 306

X — 302

# FIG. 3

400

414

X'

OUTPUT (W_O) 412

ATTENTION HEADS 410

QUERY (W_Q) 404

KEY (W_K) 406

VALUE (W_V) 408

402

X

# FIG. 4

510

| QUERY TENSOR 1 |
|---|
| QUERY TENSOR 2 |
| QUERY TENSOR 3 |
| QUERY TENSOR 4 |

✖

520

| KEY TENSOR 1 | KEY TENSOR 2 | KEY TENSOR 3 | KEY TENSOR 4 |
|---|---|---|---|

=

530

| $Q_1K_1$ | $Q_1K_2$ | $Q_1K_3$ | $Q_1K_4$ |
|---|---|---|---|
| $Q_2K_1$ | $Q_2K_2$ | $Q_2K_3$ | $Q_2K_4$ |
| $Q_3K_1$ | $Q_3K_2$ | $Q_3K_3$ | $Q_3K_4$ |
| $Q_4K_1$ | $Q_4K_2$ | $Q_4K_3$ | $Q_4K_4$ |

✖

540

| VALUE TENSOR 1 |
|---|
| VALUE TENSOR 2 |
| VALUE TENSOR 3 |
| VALUE TENSOR 4 |

=

550

| TOKEN 1 |
|---|
| TOKEN 2 |
| TOKEN 3 |
| TOKEN 4 |
| **TOKEN 5** |

# FIG. 5

510

| QUERY TENSOR 1 |
| QUERY TENSOR 2 |
| QUERY TENSOR 3 |
| QUERY TENSOR 4 |

✖

520

| KEY TENSOR 1 | KEY TENSOR 2 | KEY TENSOR 3 | KEY TENSOR 4 |

✖

530

| $Q_1K_1$ | $Q_1K_2$ | $Q_1K_3$ | $Q_1K_4$ |
| $Q_2K_1$ | $Q_2K_2$ | $Q_2K_3$ | $Q_2K_4$ |
| $Q_3K_1$ | $Q_3K_2$ | $Q_3K_3$ | $Q_3K_4$ |
| $Q_4K_1$ | $Q_4K_2$ | $Q_4K_3$ | $Q_4K_4$ |

✖

540

| VALUE TENSOR 1 |
| VALUE TENSOR 2 |
| VALUE TENSOR 3 |
| VALUE TENSOR 4 |

▌▌

550

| TOKEN 1 |
| TOKEN 2 |
| TOKEN 3 |
| TOKEN 4 |
| TOKEN 5 |

# FIG. 6

**CPU 702**

SCHEDULER 704

**KV CACHE MANAGER 706**

PAGE TO BLOCK TABLES 708

BLOCK ALLOCATION 710

MEMORY 712

**GPU WORKER 730**

COMPUTE 732

KV CACHE 734

# FIG. 7

**Request A**
Prompt: "Some people favor calico cats for their"
Outputs: "fur" → "patterns" → …

LOGICAL KV CACHE PAGES

| | | | |
|---|---|---|---|
| PAGE 0 | ① Some | ① people | ① favor | ① calico |
| PAGE 1 | ① cats | ① for | ① their | ② fur |
| PAGE 2 | ③ patterns | | | |

PAGE TO BLOCK TABLE

| PHYSICAL BLOCK NUMBER | # FILLED |
|---|---|
| ① 3 | ① 4 |
| ① 2 | ① 3 → 4 ② |
| ③ 6 | ③ 1 |
| -- | -- |

PHYSICAL KV BLOCKS (KV CACHE 734)

| | | | | |
|---|---|---|---|---|
| BLOCK 0 | | | | |
| BLOCK 1 | | | | |
| BLOCK 2 | ① cats | ① for | ① their | ② fur |
| BLOCK 3 | ① Some | ① people | ① favor | ① calico |
| BLOCK 4 | | | | |
| BLOCK 5 | | | | |
| BLOCK 6 | ③ patterns | | | |
| BLOCK 7 | | | | |
| BLOCK 8 | | | | |

# FIG. 8

FIG. 9

PAGE TO BLOCK TABLE

| LOGICAL KV CACHE PAGES | PHYSICAL BLOCK NUMBER |
|---|---|
| PAGE 0 | 6 |
| PAGE 1 | 5 |
| PAGE 2 | 1 |
| PAGE 3 | 4 |
| PAGE 4 | 2 |
| PAGE 5 | 8 |
| PAGE 6 | 8 |
| PAGE 7 | 8 |
| PAGE 8 | 2 |
| PAGE 9 | 2 |

QUANTIZATION LEVELS

| PAGE 0 | FP32 |
|---|---|
| PAGE 1 | FP32 |
| PAGE 2 | FP32 |
| PAGE 3 | FP32 |
| PAGE 4 | FP16 |
| PAGE 5 | FP16 |
| PAGE 6 | INT8 |
| PAGE 7 | INT8 |
| PAGE 8 | INT8 |
| PAGE 9 | INT8 |

PHYSICAL KV BLOCKS (KV CACHE 734)

| | | | | |
|---|---|---|---|---|
| BLOCK 0 | | | | |
| BLOCK 1 | PAGE 2 | | | |
| BLOCK 2 | PAGE 4 | | PAGE 8 | PAGE 9 |
| BLOCK 3 | | | | |
| BLOCK 4 | PAGE 3 | | | |
| BLOCK 5 | PAGE 1 | | | |
| BLOCK 6 | PAGE 0 | | | |
| BLOCK 7 | | | | |
| BLOCK 8 | PAGE 7 | PAGE 6 | PAGE 5 | |

# FIG. 10

FIG. 11

1200

1202
SWAP OUT EVENT?

NO

YES

1204
NEW TOKENS ADDED TO PAGE?

NO

YES

1206
CHANGE IN SYSTEM LOAD?

NO

YES

1212
RE-EVALUATE QUANTIZATION PRECISION OF PAGE 1212

1214
CHANGE IN QUANTIZATION LEVEL?

NO

YES

WAIT FOR SWAP IN 1210

1216
QUANTIZATION PRECOMPUTED?

NO

YES

1218
QUANTIZE OR DEQUANTIZE PAGE TO NEW PRECISION 1218

UPDATE POINTER 1220

FIG. 12

1300

DETERMINE AN IMPORTANCE SCORE OF A KEY-VALUE CACHE PAGE BASED ON ONE OR MORE ATTENTION SCORES OF ONE OR MORE TOKENS 1302

DETERMINE A QUANTIZATION LEVEL BASED ON THE IMPORTANCE SCORE 1304

RETRIEVE THE KEY-VALUE CACHE PAGE AT THE DETERMINED QUANTIZATION LEVEL FROM A MEMORY 1306

STORE THE KEY-VALUE CACHE PAGE QUANTIZED AT THE QUANTIZATION LEVEL IN A KEY-VALUE CACHE BLOCK OF A KEY-VALUE CACHE 1308

# FIG. 13

COMPUTING DEVICE 1400

MEMORY 1404

1200

1300

KV CACHE
MANAGER 706

PROCESSING DEVICE
1402

ANTENNA 1422

COMMUNICATION DEVICE
1412

DISPLAY DEVICE
1406

GPS DEVICE
1416

POWER
SOURCE /
POWER
CIRCUITRY
1414

AUDIO OUTPUT DEVICE
1408

AUDIO INPUT DEVICE
1418

OTHER OUTPUT DEVICE
1410

OTHER INPUT DEVICE
1420

SENSOR
1430

# FIG. 14

Europäisches
Patentamt

European
Patent Office

Office européen
des brevets

**EUROPEAN SEARCH REPORT**

**Application Number**

EP 25 20 6054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | June Yong Yang ET AL: "No Token Left Behind: Reliable KV Cache Compression via Importance-Aware Mixed Precision Quantization", arXiv.org, 28 February 2024 (2024-02-28), pages 1-21, XP093363083, Retrieved from the Internet: URL:https://arxiv.org/pdf/2402.18096 * abstract * * page 5, column 1, line 20 - column 2, line 28 * * page 18, line 8 - page 19, line 6 * ----- | 1-15 | INV. G06N3/0495 G06N3/063 G06F12/0875 G06N3/082 G06N3/0455 |
| A | SUYU GE ET AL: "Model Tells You What to Discard: Adaptive KV Cache Compression for LLMs", ARXIV.ORG, CORNELL UNIVERSITY LIBRARY, 201 OLIN LIBRARY CORNELL UNIVERSITY ITHACA, NY 14853, 29 October 2024 (2024-10-29), XP091920325, * abstract * * page 4, line 1 - line 14 * ----- | 5 | |
| A | YUHAN LIU ET AL: "CacheGen: KV Cache Compression and Streaming for Fast Large Language Model Serving", ARXIV.ORG, CORNELL UNIVERSITY LIBRARY, 201 OLIN LIBRARY CORNELL UNIVERSITY ITHACA, NY 14853, 19 July 2024 (2024-07-19), XP091823320, * abstract * * page 10, column 1, line 1 - column 2, line 10 * ----- -/-- | 6 | |

TECHNICAL FIELDS SEARCHED (IPC)

G06N

The present search report has been drawn up for all claims

| Place of search | Date of completion of the search | Examiner |
|---|---|---|
| The Hague | 9 February 2026 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Europäisches
Patentamt
European
Patent Office
Office européen
des brevets

**Application Number**

EP 25 20 6054

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUIKANG LIU ET AL: "IntactKV: Improving Large Language Model Quantization by Keeping Pivot Tokens Intact", ARXIV.ORG, CORNELL UNIVERSITY LIBRARY, 201 OLIN LIBRARY CORNELL UNIVERSITY ITHACA, NY 14853, 25 May 2024 (2024-05-25), XP091767056, * abstract * * page 3, column 2, line 10 - page 4, column 2, line 10 *<br>----- | 8 | |
| A | ZHENYU ZHANG ET AL: "H_2O: Heavy-Hitter Oracle for Efficient Generative Inference of Large Language Models", ARXIV.ORG, CORNELL UNIVERSITY LIBRARY, 201 OLIN LIBRARY CORNELL UNIVERSITY ITHACA, NY 14853, 19 July 2023 (2023-07-19), XP091566816, * abstract *<br>----- | 1-15 | |
| A | ZECHUN LIU ET AL: "LLM-QAT: Data-Free Quantization Aware Training for Large Language Models", ARXIV.ORG, CORNELL UNIVERSITY LIBRARY, 201 OLIN LIBRARY CORNELL UNIVERSITY ITHACA, NY 14853, 29 May 2023 (2023-05-29), XP091521899, * abstract *<br>----- | 1-15 | **TECHNICAL FIELDS SEARCHED (IPC)** |

The present search report has been drawn up for all claims

| Place of search | Date of completion of the search | Examiner |
|---|---|---|
| The Hague | 9 February 2026 | Rousset, Antoine |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................................
& : member of the same patent family, corresponding document

page 2 of 2